(19) Europäisches Patentamt
European Patent Office
Office européen des brevets

(11) EP 1 715 941 B1

(12) # EUROPÄISCHE PATENTSCHRIFT

(45) Veröffentlichungstag und Bekanntmachung des Hinweises auf die Patenterteilung:
**08.07.2009 Patentblatt 2009/28**

(21) Anmeldenummer: **05715330.6**

(22) Anmeldetag: **15.02.2005**

(51) Int Cl.:
***B01D 71/68*** $^{(2006.01)}$ ***A61M 1/16*** $^{(2006.01)}$
***B01D 67/00*** $^{(2006.01)}$ ***B01D 69/08*** $^{(2006.01)}$

(86) Internationale Anmeldenummer:
**PCT/EP2005/001483**

(87) Internationale Veröffentlichungsnummer:
**WO 2005/082505 (09.09.2005 Gazette 2005/36)**

(54) **Dialysemembran mit verbesserter mittelmolekülentfernung**

Dialysis membrane having improved ability for removal of middle molecules

Membrane de dialyse avec une élimination améliorée des molécules de taille moyenne

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.02.2004 DE 102004008221**

(43) Veröffentlichungstag der Anmeldung:
**02.11.2006 Patentblatt 2006/44**

(73) Patentinhaber: **Membrana GmbH**
**42289 Wuppertal (DE)**

(72) Erfinder:
- **WECHS, Friedbert**
  **63939 Wörth (DE)**
- **GEHLEN, Arne**
  **820 24 Taufkirchen (DE)**
- **VON HARTEN, Bodo**
  **42119 Wuppertal (DE)**
- **KRÜGER, Richard**
  **42349 Wuppertal (DE)**
- **SCHUSTER, Oliver**
  **582 85 Gevelsberg (DE)**

(74) Vertreter: **Schröder, Richard et al**
**CPW GmbH**
**Kasinostrasse 19-21**
**42103 Wuppertal (DE)**

(56) Entgegenhaltungen:
**US-A- 5 246 582** **US-A- 5 290 448**
**US-A- 5 505 859** **US-A- 5 683 584**

- **PATENT ABSTRACTS OF JAPAN Bd. 016, Nr. 329 (C-0963), 17. Juli 1992 (1992-07-17) & JP 04 094727 A (NITTO DENKO CORP), 26. März 1992 (1992-03-26)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine hydrophile, mit Wasser benetzbare semipermeable Hohlfasermembran auf Basis eines die Membran Struktur aufbanenden synthetischen Polymers insbesondere zur Hemodialyse oder zur konventionellen Hemodiafiltration mit geringen Austauschvolumina, die über ihre Wand eine offenporige integral asymmetrische Struktur, an ihrer dem Lumen zugewandten Innenoberfläche eine Poren aufweisende Trennschicht von 0,1 bis 2 μm Dicke sowie an die Trennschicht angrenzend eine offenporige Stützschicht besitzt und die eine Ultrafiltrationsrate in Albuminlösung im Bereich zwischen 5 und 25 ml/(h·m$^2$·mmHg) aufweist. Die Erfindung betrifft des weiteren ein Verfahren zur Herstellung einer solchen Membran.

Bereits seit einer Reihe von Jahren werden bei der konventionellen Behandlung von Patienten mit chronischem Nierenversagen Membranen in der Hauptsache auf Basis cellulosischer Polymerer eingesetzt. Diese Membranen weisen relativ geringe Ultrafiltrationsraten auf und entfernen bei der Hemodialyse über diffusive Mechanismen im wesentlichen allein niedermolekulare Urämietoxine, d.h. sie besitzen eine niedrige Ausschlussgrenze, die die Elimination von Stoffen bis zu einer Größe von etwa 5000 Dalton ermöglicht.

In den letzten Jahren ist jedoch in zunehmendem Maße das Bestreben, bei der Hemodialyse neben den niedermolekularen nierengängigen Substanzen, d.h. Urämietoxinen und/oder urämischen Markern wie z.B. Harnstoff, Creatinin oder Phosphat insbesondere auch sogenannte Mittelmoleküle und insbesondere niedermolekulare Proteine wie z.B. $\beta_2$-Mikroglobulin ($\beta_{2M}$) aus dem zu behandelnden Blut zu entfernen. Aus zahlreichen Untersuchungen geht hervor, dass niedermolekulare Proteine Verursacher für Komplikationen während der Dialyse sind. So wird eine Ansammlung von $\beta_{2m}$ im Blut als Ursache für Amyloidose und das Carpal Tunnel Syndrom gesehen. Derartige Mittelmoleküle lassen sich jedoch über diffusive Mechanismen nicht in effizienter Weise entfernen, weshalb angestrebt wird, die Permeabilität der Membranen für niedermolekulare Proteine zu erhöhen. Hierzu wurden in den letzten Jahren vornehmlich sogenannte High-Flux Dialysemembranen entwickelt, d.h. Dialysemembranen mit hohen Ultrafiltrationsraten für Wasser, die zur High-Flux Hemodialyse, Hemodiafiltration oder Hemofiltration geeignet sind. Bei derartigen Anwendungen zur Blutbehandlung ist wesentlich die Entfernung großer Mengen von Wasser aus dem Blutkreislauf des Patienten. Gleichzeitig ist mit diesen Membranen eine konvektive-Entfernung von sogenannten Mittelmolekülen möglich, wobei aber bei einer erhöhten Durchlässigkeit gegenüber niedermolekularen Proteinen oftmals die Gefahr eines erhöhten Verlusts wertvoller Blutbestandteile wie z.B. des Albumins besteht. Daher werden möglichst hohe Siebkoeffizienten für die niedermolekularen Proteine angestrebt, die im Idealfall bei dem maximal möglichen Wert von 1 liegen. Auf der anderen Seite sollen die Siebkoeffizienten für Albumin möglichst gering sein.

Während im Bereich der diffus ionskontrollierten Hemodialyse mit niedrigen Ultrafiltrationsraten zum überwiegenden Teil Membranen auf Basis cellulosischer Polymerer eingesetzt werden, sind in den letzten Jahren für den Bereich der High-Flux Hemodialyse, aber auch für die Hemodiafiltration oder Hemofiltration vornehmlich synthetische Polymere wie z.B. Polyamide, Polyvinylalkohole, Ethylen-Vinylalkohol Copolymere, Polyether-Polyamid Blockcopolymere und wegen ihrer herausragenden physikochemischen Eigenschaften verstärkt technische Kunststoffe wie z.B. aromatische Sulfonpolymere, Polyphenylensulfide, Polyetherimide oder Polyetherketon untersucht worden und als Membranmaterial für Hohlfasermembranen zum Einsatz gelangt.

In der US 5 505 859 werden Membranen auf Basis von cellulosischen Polymeren beschrieben, d.h. auf Basis von Polymeren, die den natürlichen Polymeren zuzuordnen sind. Zur Erzielung einer hinreichend guten Trennleistung ist bei den Membranen der US 5 505 859 vor der Trocknung eine Imprägnierung mit einer Glycerin/Wasser-Mischung zur Stabilisierung der Porenstruktur in der Membranwand erforderlich. Darüber hinaus weisen die Membranen der US 5 505 859 nur geringe Ultrafiltrationsraten auf, die Ihren Einsatz auf Anwendungen im Bereich der low-flux Dialyse beschränken.

Die US 5 683 584 betrifft in einer Ausführungsform asymmetrische mikroporöse Hohlfasermembranen auf Basis hochpolarer Polyimide, die geringe

Siebkoeffizienten für Albumin in Kombination mit hohen Siebkoeffizienten für Myoglobin aufweisen können. Die Membranen der US 5 683 584 weisen jedoch hohe Ultrafiltrationsraten auf, die für Wasser oberhalb von 500 ml/(h·m$^2$·mmHg) liegen. Derartig hohe Ultrafiltrationsraten führen jedoch bei der Dialysebehandlung zu einer großen Belastung des Patienten.

Derartige Membranen werden beispielsweise in der EP 305 787 beschrieben, Die Membranen der EP 305 787 sind aus einem ersten hydrophoben polymer und einem hydrophilen zweiten Polymer aufgebaut und haben eine asymmetrische Struktur. Mit Ultrafiltrationsraten für Wasser mit mehr als 250 ml/(h·m$^2$·mmHg) sind sie für den Einsatz in der High-Flux Dialyse bis hin zur Hemofitration geeignet. Die Porenstruktur der Membranen der EP 305 787 werden mit einer Glycerin/Nasser-Mischung stabilisiert und weisen dann Siebkoeffizienten für Albumin von etwa 0,001 und für $\beta_{2M}$ von 0,6 bis 0,8 auf. Die Membranen besitzen einen aus drei Schichten zusammengesetzten Aufbau mit einer Trennschicht in Form einer dichten und relativ dünnen Haut, einer darunterliegenden Schicht mit Schwammstruktur und daran angrenzend einer dritten Schicht mit einer aus fingerförmigen, groben Poren bestehenden Struktur.

Die EP 344 581 beschreibt Membranen ohne Fingerporen und ohne asymmetrische Porengrößen für die

Blutbehandlung, die Ultrafiltrationsraten von 635 ml/(h·m$^2$·mmHg) und darüber aufweisen und die die Entfernung gefährlicher Stoffe wie $\beta_{2M}$ und den Rückhalt nützlicher Komponenten wie Albumin mit hoher Effizienz ermöglichen. Die Membranen der EP 344 581 bestehen aus einer Mischung eines Polyarylats mit einem Polysulfon und weisen über dem Membranquerschnitt eine homogene und gleichförmige fibrilläre Struktur auf. Die in der EP 344 581 offenbarten Membranen sind hydrophob und müssen nach den Angaben der EP 344 581 entweder vor der Trocknung mit Glycerin behandelt werden oder zunächst z.B. mit einem Alkohol gespült werden, der anschließend durch Wasser ersetzt wird.

Die EP 750 938 bezieht sich ebenfalls auf Membranen für den High-Flux Bereich, d.h. auf Membranen, die mit Ultrafiltrationsraten für Wasser von vorzugsweise mehr als 500 ml/(h·m$^2$·mmHg) eine sehr hohe Permeabilität für Wasser besitzen. Die Membranen der EP 750 938 haben sehr geringe Albuminpermeabilitäten und hohe Entfemungsraten für das niedermolekulare Protein $\beta_2$-Mikroglobutin. Auch die EP 824 960 hat Membranen mit hohen Ultrafiltrationsraten für Wasser und verbesserter Permeation für $\beta_2$-Mikroglobulin zum Gegenstand.

Bei den genannten High-Flux Membranen, d.h. den Dialysemembranen mit hohen Ultrafiltrationsraten oberhalb von etwa 250 ml/(h·m$^2$·mmHg), besteht jedoch oftmals die Gefahr, dass in der Anwendung starke Volumenstromschwankungen auftreten, die insbesondere bei älteren Patienten zu hohen Belastungen führen. Darüber hinaus wird bei High-Flux Dialysemembranen ein Risiko in der möglichen Rückfiltration aufgrund negativer Transmembrandrücke in Teilbereichen der Dialysatoren gesehen, bei der mit Pyrogenen kontaminiertes Dialysat auf die Blutseite strömen und insbesondere bei der Langzeitdialyse zu gefährlichen Reaktionen beim Patienten führen kann. Letztlich wird bei verschiedenen Anwendungen der Blutreinigung ein Vorteil in einer langsamen und schonenden Verringerung des Wasseranteils im Blut sowie einer langsamen Entfernung nierengängigen Substanzen aus dem Blut gesehen.

Daher besteht Bedarf an Hohlfasermembranen zur Blutreinigung mit moderaten Ultrafiltrationsraten unterhalb des High-Flux Bereichs, d.h. Ultrafiltrationsraten für Wasser unterhalb etwa 200 bis 250 ml/(h·m$^2$·mmHg) oder Ultrafiltrationsraten in Albuminlösung im Bereich zwischen 5 und 25 ml/(h·m$^2$·mmHg). Bei diesen Membranen zeigt sich jedoch eine Abhängigkeit der Durchlässigkeit für niedermolekulare Proteine von der Ultrafiltrationsrate. Mit einer Reduzierung der Ultrafiltrationsraten der Membranen nehmen auch die erreichten Siebkoeffizienten für niedermolekulare Proteine deutlich ab. Dies wird beispielsweise auch durch die in der EP 828 553 dargestellten Zusammenhänge belegt.

Die EP 828 553 offenbart integrale, mehrfach asymmetrische Membranen für den Einsatz in der Hemodialyse, der Hemodiafiltration oder der Hemofiltration, die aus in ε-Caprolactam löslichen Polymeren aufgebaut sind. Die Membranen der EP 828 553 weisen einen dreischichtigen Aufbau auf mit einer dünnen Trennschicht, daran angrenzend einer schwammartigen grobporigen Stützschicht ohne Fingerporen und einer sich an die Stützschicht anschließenden dritten Schicht, deren Porengröße kleiner als die der Stützschicht ist und die die hydraulische Permeabilität der Membran bestimmt. Gemäß den Beispielen der EP 828 553 werden zwar für Membranen im High-Flux Bereich, d.h. für Membranen mit Ultrafiltrationsraten für Wasser oberhalb von ca. 250 ml/(h·m$^2$·mmHg), Siebkoeffizienten bis 0,8 für Cytochrom C erreicht, das ein Molekulargewicht von 12500 Dalton aufweist und vielfach als Markermolekül für $\beta_2$-Mikroglobulin verwendet wird. Im Beispiel 13 offenbart die EP 828 553 für eine solche High-Flux Membran mit einer Ultrafiltrationsrate für Wasser von 600 ml/(h·m$^2$·mmHg), entsprechend einer Ultrafiltrationsrate für Albumin von 50 ml/(h·m$^2$·mmHg), einen Siebkoeffizienten für Cytochrom C von 0,75 in Kombination mit einem Siebkoeffizienten für Albumin von 0,05. Für Membranen im unteren bis mittleren Bereich der Ultrafiltrationsraten, d.h. mit einer Ultrafiltrationsrate für Wasser unterhalb von 250 bis 300 ml/(h·m$^2$·mmHg) bzw. einer Ultrafiltrationsrate für Albumin unterhalb von ca. 25 ml/(h·m$^2$·mmHg) liegen die maximal erzielten Siebkoeffizienten für Cytochrom C abhängig von der Ultrafiltrationsrate im Low-Flux Bereich bei maximal 0,37 und im mittleren Bereich der Ultrafiltrationsraten, d.h. im Middle-Flux Bereich mit einer Ultrafiltrationsrate für Wasser oberhalb ca. 150 bis 200 ml/(h·m$^2$·mmHg) bei höchstens 0,58.

Die EP 997 182 hat Hohlfasermembranen für die Blutreinigung mit einer Trennschicht an ihrer lumenseitigen Oberfläche zum Gegenstand, die auf Polysulfonen basieren und Polyvinylpyrrolidon u.a. zur Hydrophilierung enthalten. In den Beispielen der EP 997 182 werden Hohlfasermembranen beschrieben, die mit Ultrafiltrationsraten für Wasser im Bereich von 165 bis ca. 200 ml/(h·m$^2$·mmHg), in dem abhängig von der Beschaffenheit der Membran Ultrafiltrationsraten in Albuminlösung oberhalb von etwa 15 ml/(h·m$^2$·mmHg) angenommen werden können, zwar nicht für die Low-Flux Hemodialyse jedoch für konventionelle Hemodiafiltration mit geringen Austauschvolumina Verwendung finden können. Diese Membranen, die bei der Herstellung zur Stabilisierung der Porenstruktur mit einer wässrigen Glycerin/Wasserlösung behandelt worden sind, weisen in dem genannten Ultrafiltrationsbereich bei geringen Siebkoeffizienten für Albumin Siebkoeffizienten für $\beta_2$-Mikroglobulin bis ca. 0,65 auf.

Die EP 716 859 offenbart Membranen mit einer homogenen Membranstruktur, d.h. mit einer Membranstruktur ohne Asymmetrie über dem Wandquerschnitt. Die Membranen basieren beispielsweise auf Polysulfon, Polyethersulfon oder Polyarylsulfon, wobei ein hydrophiles Polymer wie z.B. Polyvinylpyrrolidon oder Polyethylenglykol zur Erhöhung der Hydrophilie der Membranen zugesetzt wurde. Die Membranen der EP 716 859 werden nach der Koagulation und vor der Trocknung mit einer Glycerinlösung imprägniert, um die Membranstruktur bei der Trocknung zu erhalten. Für die so hergestellten Membranen werden gemäß den Beispielen Siebkoeffizienten für Albumin von kleiner 0,01 angegeben. Bei kleinen Filtratflüssen von 10 ml/min lassen sich Siebkoeffizienten für $\beta_{2M}$ bis 0,88 erreichen. Die Ultrafiltrationsraten dieser Membranen für Blut, die von der Größenordnung Ultrafiltrationsraten in Albuminlösung vergleichbar

sind, liegen im Bereich zwischen 16,5 und 25 ml/(h·m$^2$·mmHg). Ein bei homogenen Membranen, bei denen die gesamte Membranstruktur an der Filtration teilnimmt, oftmals beobachteter Nachteil liegt in der Gefahr des Zusetzens der Porenstruktur mit den vom Blut abzutrennenden Bestandteilen. Eine Reduzierung dieser Gefahr ist durch eine Behandlung der Membran mit Glycerin oder ähnlichen Stoffen möglich, so dass auch aus diesem Grund bei derartigen Membranen eine Imprägnierung mit z.B. Glycerin erforderlich ist.

Die im Stand der Technik beschriebenen Membranen auf Basis synthetischer Polymerer sind, wenn das die Membran aufbauende Polymer allein aus einem hydrophoben Polymer besteht, nicht mit wässrigen Medien benetzbar. Dies hat zur Folge, dass sie entweder nicht vollständig getrocknet werden dürfen oder aber mit einer porenstabilisierenden Flüssigkeit wie beispielsweise Glycerin oder einem Polyethylenglykol zur Erzielung einer Benetzbarkeit und zur Stabilisierung der Membranstruktur gefüllt werden müssen. Ohne eine solche Stabilisierung nimmt die Permeabilität der Membran mit jedem Trocknungsvorgang kontinuierlich ab, und die Trenncharakteristik der Membran verändert sich. Auch die aus dem Stand der Technik bekannten Membranen, die neben einem nembranbildenden hydrophoben Polymer eine hydrophile Polymerkomponente enthalten, um eine ausreichende Benetzbarkeit der Membran mit Wasser zu gewährleisten, werden mit einem Porenfüller versehen, um eine Stabilisierung der Membrancharakteristik bei der Trocknung und zumindest eine nennenswerte Permeabilität für Mittelmoleküle bzw. niedermolekulare Proteine zu gewährleisten. Ohne eine solche Stabilisierung besitzen sie eine nur unzureichende Permeabilität für Mittelmoteküle bzw. niedermolekulare Proteine. Für mit einem Porenstabilisator versehene Membranen ergeben sich aber bei der Weiterverarbeitung und in der Anwendung Nachteile.

Es ist Aufgabe der vorliegenden Erfindung, für Blutreinigung geeignete Hohlfasermembranen mit einer Ultrafiltrationsrate in Albuminlösung unterhalb von 25 ml/(h·m$^2$·mmHg) zur Verfügung zu stellen, die ein gegenüber den Membranen des Stands der Technik vergleichbares Trennverhalten aufweisen, so dass insbesondere eine effiziente Entfernung von niedermolekularen Proteinen aus dem zu behandelnden Blut bei gleichzeitigem hohem Rückhalt wertvoller Blutbestandteile ermöglicht wird. Die Membranen sollen mit diesen Ultrafiltrationsraten für die konventionelle Hemodialyse oder die konventionelle Hemodiafiltration, d.h. für Hemodiafiltrationsanwendungen mit geringen Austauschvolumen im Bereich von ca. 4 bis 12 Litern pro Behandlung geeignet sein. Darüber hinaus sollen die Membranen eine hohe mechanische Stabilität besitzen, auch nach Trocknung stabile Leistungseigenschaften aufweisen und eine problemlose Herstellung von Dialysatoren, die diese Hohlfasermembranen enthalten, ermöglichen und keine Porenstabilisatoren zur Stabilisierung der Membranstruktur bei de r Trocknung benötigen.

Es ist des Weiteren Aufgabe der Erfindung, ein Verfahren zur Herstellung derartiger Hohlfasermembranen zur Verfügung zu stellen.

Die erfindungsgemäße Aufgabe wird zum einen durch eine hydrophile, mit Wasser benetzbare semipermeable Hohlfasermembran gemäß Anspruch 1 gelöst.

Die erfindungsgemäße Aufgabe wird des Weiteren durch eine Verfahren zur Herstellung dieser Hohlfasermembran gemäß Anspruch 10 gelöst.

Bevorzugt liegt die Ultrafiltrationsrate in Albuminlösung dieser Membranen im Bereich von 10 bis 25 ml/(h·m$^2$·mmHg) und besonders bevorzugt im Bereich von 12 bis 25 ml/(h·m$^2$·mmHg).

Die erfindungsgemäße bzw. die nach dem erfindungsgemäßen Verfahren hergestellte Hohlfasermembran weist in einer bevorzugten Ausführungsform einen Siebkoeffizienten für Cytochrom C auf, der der Beziehung (2)

$$SK_{CC} \geq 5 \cdot 10^{-5} \cdot UFR_{Alb}^3 - 0{,}004 \cdot UFR_{Alb}^2 + 0{,}1081 \cdot UFR_{Alb} - 0{,}12 \qquad (2)$$

und in einer besonders bevorzugten bevorzugten Ausführungsform einen Siebkoeffizienten für Cytochrom C, der der Beziehung (3)

$$SK_{CC} \geq 5 \cdot 10^{-5} \cdot UFR_{Alb}^3 - 0{,}004 \cdot UFR_{Alb}^2 + 0{,}1081 \cdot UFR_{Alb} - 0{,}08 \qquad (3)$$

genügt. Die Beziehungen (1), (2), (3) des Siebkoeffizienten für Cytochrom C in Abhänigkeit von der Ultrafiltrationsrate in Albuminlösung $UFR_{Alb}$ sind in Figur 1 als Kurven 'A', 'B' und 'C' dargestellt.

In einer weiteren bevorzugten Ausführungsform beträgt der Siebkoeffzient für Albumin höchstens 0,003. In einer besonders vorteilhaften Ausführungsform weist die erfindungsgemäße Hohlfasermembran einen Siebkoeffizienten für Albumin von höchstens 0,003 in Verbindung mit einem Siebkoeffizienten für Cytochrom C auf, für den die Beziehung (2)

$$SK_{CC} \geq 5 \cdot 10^{-5} \cdot UFR_{Alb}^3 - 0,004 \cdot UFR_{Alb}^2 + 0,1081 \cdot UFR_{Alb} - 0,12 \quad (2)$$

gilt. Im Rahmen der Erfindung besonders geeignet sind Hohlfasermembranen, die einen Siebkoeffizienten für Albumin von höchstens 0,003 in Verbindung mit einem Siebkoeffizienten für Cytochrom C aufweisen, für den die Beziehung (3) erfüllt ist:

$$SK_{CC} \geq 5 \cdot 10^{-5} \cdot UFR_{Alb}^3 - 0,004 \cdot UFR_{Alb}^2 + 0,1081 \cdot UFR_{Alb} - 0,08. \quad (3)$$

Generell gilt, dass der Siebkoeffizient für Cytochrom C stets kleiner oder gleich 1 sein muss. In einer weiteren bevorzugten Ausführungsform der Erfindung erfüllt der Siebkoeffizient für Cytochrom C $SK_{cc}$ über eine der Bedingungen (1), (2) oder (3) hinaus die Bedingung (4)

$$SK_{CC} \leq 5 \cdot 10^{-5} \cdot UFR_{Alb}^3 - 0,004 \cdot UFR_{Alb}^2 + 0,1081 \cdot UFR_{Alb} + 0,14, \quad (4)$$

wobei gleichzeitig die Bedingung $SK_{cc} \leq 1$ erfüllt sein muss.

Wie ausgeführt, nehmen mit einer Reduzierung der Ultrafiltrationsraten der Membranen auch die Siebkoeffizienten für niedermolekulare Proteine ab. Die Beziehungen (1), (2) und (3) spiegeln diese allgemeine Tendenz abnehmender Siebkoeffizienten für Cytochrom C, $SK_{cc}$, mit abnehmender Ultrafiltrationsrate in Albuminlösung, $UFR_{Alb}$, wider. Dabei hat sich für die erfindungsgemäßen Hohlfasermembranen bzw. die mittels des erfindungsgemäßen Verfahrens hergestellten Hohlfasermembranen gezeigt, dass für solche Membranen mit einer Ultrafiltrationsrate in Albuminlösung $UFR_{Alb}$ im Bereich von 5 bis kleiner 12 ml/(h·m$^2$·mmHg), d.h. für Low-Flux Hohlfasermembranen, die für die konventionelle Hemodialyse geeignet sind, die Siebkoeffizienten für Cytochrom C stets gleich oder größer als 0,4 sind. Andererseits zeigen erfindungsgemäße Hohtfasermembranen mit einer Ultrafiltrationsrate in Albuminlösung im Bereich von 12 bis 25 ml/(h·m$^2$·mmHg), d.h. Hohlfasermembranen, die für die konventionelle Hemodiafiltration mit geringen Austauschvolumina geeignet sind, Siebkoeffizienten für Cytochrom C, die stets gleich oder größer als 0,6 sind.

Daher betrifft die Erfindung auch eine hydrophile, mit Wasser benetzbare, ein synthetisches erstes Polymer umfassende semipermeable Hohlfasermembran zur Blutreinigung mit einer Ultrafiltrationsrate in Albuminlösung im Bereich von 5 bis kleiner 12 ml/(h·m$^2$·mmHg), wobei die Hohlfasermembran über ihre Wand eine offenporige integral asymmetrische Struktur, an ihrer dem Lumen zugewandten Innenoberfläche eine Poren aufweisende Trennschicht von 0,1 bis 2 $\mu$m Dicke sowie an die Trennschicht angrenzend eine offenporige Stützschicht besitzt, die dadurch gekennzeichnet ist, dass sie ohne Zusätze, die die Poren in der Membranwand stabilisieren, und nach einer vorherigen Trocknung einen Siebkoeffizienten für Albumin von höchstens 0,005 in Verbindung mit einem Siebkoeffizienten für Cytochrom C von mindestens 0,4 aufweist. Vorzugsweise besitzt diese Hohlfasermembran einen Siebkoeffizienten für Cytochrom C von mindestens 0,47.

Des Weiteren betrifft die Erfindung auch eine hydrophile, mit Wasser benetzbare, ein synthetisches erstes Polymer umfassende semipermeable Hohlfasermembran zur Blutreinigung mit einer Ultrafiltrationsrate in Albuminlösung im Bereich von 12 bis 25 ml/(h·m$^2$·mmHg), wobei die Hohlfasermembran über ihre Wand eine offenporige integral asymmetrische Struktur, an ihrer dem Lumen zugewandten Innenoberfläche eine Poren aufweisende Trennschicht von 0,1 bis 2 $\mu$m Dicke sowie an die Trennschicht angrenzend eine offenporige Stützschicht besitzt, die dadurch gekennzeichnet ist, dass sie ohne Zusätze, die die Poren in der Membranwand stabilisieren, und nach einer vorherigen Trocknung einen Siebkoeffizienten für Albumin von höchstens 0,005 in Verbindung mit einem Siebkoeffizienten für Cytochrom C von mindestens 0,6 aufweist. Vorzugsweise besitzt diese Hohlfasermembran einen Siebkoeffizienten für Cytochrom C von mindestens 0,7 und besonders bevorzugt einen Siebkoeffizienten für Cytochrom C von mindestens 0,8.

Die erfindungsgemäßen Membranen weisen hervorragende Trenneigenschaften mit einer scharfen Trenncharakteristik auf. Sie ermöglichen eine herausragende Elimination von niedennolekularen Proteinen bei gleichzeitig hervorragendem Rückhalt von Albumin, ohne dass eine Stabilisi erung der Poren durch Nachbehandlung der Membranen mittels eines flüssigen Porenstabilisators wie z.B. Glycerin oder Polyethylenglykol erfolgen muss. Auf Grund der scharfen Trenncharakteristik und des hervorragendem Rückhalts von Albumin kann sogar die Struktur bzw. Trennschicht der erfindungsgemäßen Membranen vergleichsweise offener ausgeführt werden, oh ne dass die Siebkoeffizienten für Albumin die erfindungsgemäß geforderten Grenzen überschreiten. Hierduch lassen sich gleichzeitig die Siebkoeffizienten

für Cytochrom C weiter erhöhen, und die Elimination von niedermolekularen Proteinen wie z.B. $\beta_2$-Mikroglobulin kann weiter verbessert werden.

In der Regel zeigen die erfindungsgemäßen Membranen gleichzeitig einen verbesserten Pyrogenrückhalt. Für die Anwendung in der Dialyse ist die Frage relevant, inwieweit die zur Blutbehandlung eingesetzte Membran den Endotoxin- und Pyrogentransfer durch die Membranwand verhindert werden kann. Studien zufolge konnten in vielen Dialysezentren insbesondere auch in der Dialysierflüssigkeit Pyrogene nachgewiesen werden. Daraus resultiert nicht nur bei High-Flux Membranen, sondern auch bei Membranen mit geringeren Ultrafiltrationsraten die Gefahr, dass Pyrogene oder biologisch aktive Endotoxinfragmente die Membranwand passieren können. Die erfindungsgemäßen Membranen sind im wesentlichen undurchlässig gegenüber dem Durchtritt von Pyrogenen, woraus sich für den Dialysepatienten ein höheres Maß an Sicherheit ergibt.

Im Sinne der vorliegenden Erfindung wird unter einer integral asymmetrischen Membran eine Membran verstanden, bei der Trennschicht und Stützschicht aus dem gleichen Material bestehen und zusammen unmittelbar bei der Membranherstellung ausgebildet wurden, wodurch beide Schichten als integrale Einheit miteinander verbunden sind. Beim Übergang von der Trennschicht zur Stützschicht erfolgt allein eine Änderung in Bezug auf die Membranstruktur. Ausgehend von der Trennschicht ändert sich dann bei der integral asymmetrischen Membran in der Stützstruktur die Porengröße über der Wanddicke. Einen Gegensatz dazu bilden einerseits beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen. Einen Gegensatz bilden andererseits symmetrische Membranen oder homogene Membranen, bei denen die Größe der Membranporen über die Wand im wesentlichen gleichförmig ist, d.h. sich im wesentlichen nicht ändert. Integral asymmetrische Membranen bieten gegenüber symmetrischen, homogenen, also über die Wanddicke hinsichtlich der Porengröße gleichförmigen Membranen aufgrund der geringen Dicke der Trennschicht in der Regel den Vorteil einer deutlichen Verringerung des hydraulischen Widerstands und damit eines verbesserten konvektiven Transports insbesondere auch von Substanzen im Mittelmolekülbereich. Darüber hinaus erlauben sie eine unabhängige Steuerung der hydraulischen Permeabilität und der Trenncharakteristik der Membran.

Generell verhilft die Behandlung bzw. Beladung der Membranen des Stands der Technik mit z.B. Glycerin zwar zu einer Stabilisierung der Porenstruktur und wird bei Membranen nach dem Stand der Technik durchgeführt, um bestimmte Trennleistungen der Membran auch noch nach der für die Verarbeitung der Membranen notwendigen Trocknung zu gewährleisten. In der Weiterverarbeitung der Hohlfasermembranen zur Herstellung eines Dialysators ergeben sich mit glycerinhaltige Membranen jedoch Nachteile, so beispielsweise bei der üblichen Einbettung der Hohlfasermembranenden in ein Einbettharz. Vielfach kleben die glycerinhaltigen Membranen aneinander, so dass das Einbettmaterial, z:B. Polyurethan, nicht in Zwischenräume zwischen den Hohlfasermembranen eindringen kann. Dies hat jedoch Undichtigkeiten in den Einbettungen zur Folge. Darüber hinaus ist vor einem Einsatz von Dialysatoren, die glycerinbeladene Membranen enthalten, d.h. vor dem Einsatz zur Blutreinigung eine aufwendige Spülung der Dialysatoren erforderlich, um die Membranen von Glycerin frei zu spülen. Des Weiteren dürfen diese Membranen nach dem Stand der Technik nach einer Entfernung des Glycerins nicht getrocknet werden, da hierdurch eine deutliche Verschlechterung der Trenncharaktetistik und insbesondere eine starke Verringerung der Trennleistung im Bereich Mittelmoleküle, d.h. der niedermolekularen Proteine, hervorgerufen wird und darüber hinaus z.T. eine Verschlechterung des Benetzungsverhaltens resultiert.

Die erfindungsgemäßen Hohlfasermembranen hingegen sind auf Grund ihrer hydrophilen Eigenschaften auch nach einer Trocknung mit Wasser oder wässrigen Medien benetzbar. Sie weisen darüber hinaus ihre charakteristischen Trenneigenschaften nach einer Trocknung, d.h. im trockenen Zustand auch dann auf, wenn sie nicht nach der Extraktion und vor der Trocknung beispielsweise mit einer Glycerinlösung nachbehandelt wurden, d.h. auch wenn die Hohlfasermembranen im trockenen Zustand frei von Zusätzen sind, die die Poren in der Membranwand stabilisieren, d.h. auch wenn im trockenen Zustand der erfindungsgemäßen Hohlfasermembranen die Poren in der Membranwand keine sie stabilisierende Zusätze enthalten. Gegenüber Membranen des Stands der Technik zeigen die erfindungsgemäßen Membranen also eine stabile herausragende Trenncharakteristik und damit ein verbessertes Trennverhalten.

Natürlich kann die erfindungsgemäße Membran nach der Trocknung auch mit Glycerin beladen werden, sofern dies für zweckmäßig erachtet wird. Im Unterschied zu bekannten Hohlfasermembranen behält die erfindungsgemäße Hohlfasermembran ihre Eigenschaften mit einer scharfen Trenncharakteristik aber auch nach Entfernung des Glycerins und anschließender Trocknung. Wie ausgeführt, weist die erfindungsgemäße Hohlfasermembran ihre Eigenschaften nach Extraktion und Trocknung auf, selbst wenn vor der Trocknung keine Behandlung mit porenstabilisierenden Zusätzen erfolgt ist. In Bezug auf die scharfe Trenncharakteristik ist es darüber hinaus auch nicht von Belang, ob die Membran einer nachträglichen üblicherweise bei der Herstellung von Dialysatoren angewendeten Sterilisation unterzogen worden sind. Daher schließt die vorliegende Erfindung auch sterilisierte Membranen mit ein.

Die erfindungsgemäßen Hohlfasermembranen weisen eine Ultrafiltrationsrate in Albuminlösung im Bereich von 5 bis 25 ml/(h·m$^2$·mmHg) auf. Ultrafiltrationsraten in Albuminlösung unterhalb von 5 ml/(h·m$^2$·mmHg) genügen nicht

für die Entfernung ausreichend großer Mengen von Wasser bei der Blutbehandlung in Verbindung mit einem konvektiven Transport der aus dem Blut zu entfernenden Stoffe. Bei Ultrafiltrationsraten in Albuminlösung oberhalb 25 ml/(h·m$^2$·mmHg) besteht hingegen - wie ausgeführt - die Gefahr, dass in der Anwendung starke Volumenstromschwankungen auftreten und darüber hinaus das Risiko einer möglichen Rückfiltration aufgrund negativer Transmembrandrücke in Teilbereichen der Dialysatoren besteht.

Bei dem die Membranstruktur der hydrophilen Hohlfasermembranen aufbauenden Polymer handelt es sich erfindungsgemäß um ein synthetisches Polymer, das beim erfindungsgemäßen Verfahren in einer Konzentration von 12 bis 30 Gew.-% in der Spinnlösung enthalten ist. Dabei kann es sich bei dem die Membran Struktur aufbanenden Synthetischen Polymer bzw. synthetischen ersten Polymer um ein hydrophiles synthetisches Polymer handeln oder auch um eine Mischung verschiedener hydrophiler synthetischer Polymerer. So können z.B. hydrophile Polyamide, Polyvinylalkohole, Ethylen-Vinylalkohol Copolymere, Polyether-Polyamid Blockcopolymere, Polyethylenoxid-Polycarbonat Copolymere oder modifizierte, ursprünglich hydrophobe Polymere wie z.B. mit Sulfonsäuregruppen hydrophil modifizierte Polysulfone oder Polyethersulfone verwendet werden.

Bei der Herstellung der erfindungsgemäßen Membranen unter Verwendung eines die Membran Struktur aufbanenden Synthetischen hydrophilen ersten Polymers kann die Spinnlösung als weitere Komponente ein hydrophiles zweites Polymer enthalten, das in der Spinnlösung eine viskositätserhöhende Wirkung hat und/oder auch als Nukleierungsmittel und Porenbildner bei der Ausbildung der Membranstruktur fungiert.

In einer bevorzugten Ausführungsform handelt es sich bei dem die erfindungsgemäßen Hohlfasermembranen aufbauenden synthetischen ersten Polymer um ein hydrophobes erstes Polymer, das mit einem hydrophilen zweiten Polymer kombiniert ist. Im Falle der Verwendung eines hydrophoben ersten Polymers hat das hydrophile zweite Polymer neben der Wirkung, im erfindungsgemäßen Verfahren die Viskosität der Spinnlösung zu erhöhen und/oder als Nukleierungsmittel und Porenbildner zu fungieren, auch die Aufgabe, die Hydrophilie der erfindungsgemäßen Hohlfasermembranen zu gewährleisten.

Daher umfassen diese bevorzugten Hohffasermembranen ein hydrophobes erstes Polymer und ein hydrophiles zweites Polymer.

Im Falle des Einsatzes eines hydrophilen zweiten Polymers beträgt dessen Konzentration in der Spinnlösung 0,1 bis 30 Gew.-%, bezogen auf das Gewicht der Spinnlösung. Bevorzugt beträgt die Konzentration des zweiten hydrophilen Polymer in der Spinnlösung 1 bis 25 Gew.-% und besonders bevorzugt 5 bis17 Gew.-%, bezogen auf das Gewicht der Spinnlösung.

Für das erfindungsgemäße Verfahren können als synthetische Polymer bzw. Synthetisches erstes Polymer solche Polymere verwendet werden, die eine gute Löslichkeit in polaren a protischen Lösemitteln aufweisen und aus diesen unter Bildung asymmetrischer Membranen ausgefällt werden können. Als bevorzugte membranbildende, d.h. die Struktur der erfindungsgemäßen Hohlfasermembranen aufbauende hydrophobe erste Polymere werden im Rahmen der vorliegenden Erfindung technische Kunststoffe aus der Gruppe der aromatischen Sulfonpolymere, wie z.B. Polysulfon, Polyethersulfon, Polyphenylensulfon oder Polyarylethersuffon, der Polycarbonate, Polyimide, Polyetherimide, Polyetherketone, Polyphenylensulfide, Copolymere oder Modifikationen dieser Polymere oder Mischungen dieser Polymere eingesetzt. In einer besonders bevorzugten Ausführungsform ist das hydrophobe erste Polymer ein Polysulfon oder ein Polyethersulfon mit den in nachstehenden Formeln I und II dargestellten wiederkehrenden Moleküle inheiten

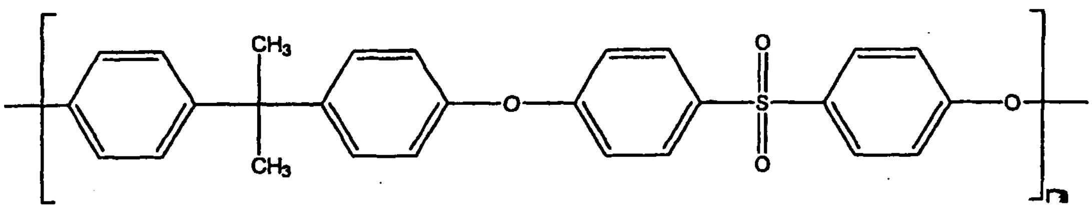

(I)

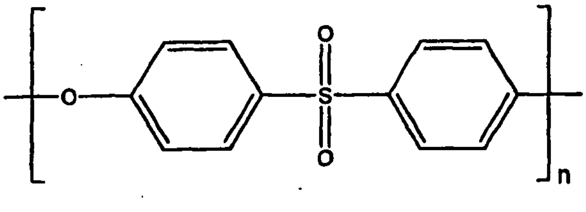

(II)

Für die Herstellung der erfindungsgemäßen Hohlfasermembranen kann i m wesentlichen von den im Stand der Technik bekannten Verfahren zur Herstellung von hydrophilen, mit Wasser benetzbaren semipermeablen Hohlfasermembranen aus einem synthetischen Polymer, die eine integral asymmetrische Struktur und eine Trennschicht an ihrer Innenseite aufweisen, ausgegangen werden. Derartige Verfahren nach dem Stand der Technik werden beispielsweise in der EP 168 783, der EP 716 859, der EP 750 938, der EP 828 553 oder der EP 997 182 beschrieben, auf deren diesbezüglichen Offenbarungsgehalt an dieser Stelle ausdrücklich Bezug genommen wird. Ausgehend beispielsweise von den dort beschriebenen Verfahren wird zur Ausbildung einer Hohlfasermembran mit einem Siebkoeffizienten für Albumin von höchstens 0,005 in Verbindung mit einem Siebkoeffizienten für Cytochrom C, für den die erfindungsgemäßen Beziehungen in Abhängigkeit von der $UFR_{Alb}$ gelten, nach dem erfindungsgemäßen Verfahren eine Innenfüllung eingesetzt, die einen Polyelektrolyten mit negativen Festladungen enthält.

Erfindungsgemäß beträgt die Konzentration des synthetischen hydrophilen bzw. des synthetischen ersten Polymers in der Spinnlösung 12 bis 30 Gew.%. Unterhalb einer Konzentration von 12 Gew.% ergeben sich Nachteile bei der Durchführung des Spinnprozesses und hinsichtlich der mechanischen Stabilität der hergestellten Hohlfasermembran. Andererseits weisen Membranen, die aus Spinnlösungen mit mehr als 30 Gew.-% des synthetischen hydrophilen bzw. des synthetischen ersten Polymers erhalten werden, eine zu dichte Struktur und zu geringe Permeabilitäten auf. Vorzugsweise enthält die Spinnlösung 15 bis 25 Gew.% des synthetischen hydrophilen bzw. des synthetischen ersten Polymers. Das synthetische hydrophilen bzw. des synthetischen erste Polymer kann auch Additive wie z.B. Antioxidantien, Nukleierungsmittel, UV-Absorber und dergleichen enthalten, um die Eigenschaften der Membranen in gezielter Weise zu modifizieren.

Als hydrophiles zweites Polymer werden vorteilhafterweise langkettige Polymere eingesetzt, die auf der einen Seite eine Kompatibilität zu dem synthetischen ersten Polymer aufweisen, und die über wiederkehrende polymere Einheiten verfügen, die an sich hydrophil sind. Vorzugsweise ist das hydrophile zweite Polymer Polyvinylpyrrolidon, Polyethylenglykol, Polyvinylalkohol, Polyglykolmonoester, Polysorbitat, wie z.B. Polyoxyethylensorbitanmonooleat, Carboxylmethylcellulose oder eine Modifikation oder ein Copolymer dieser Polymere. Besonders bevorzugt ist Polyvinylpyrrolidon. Es ist in einer weiteren bevorzugten Ausführungsform auch möglich, Mischungen von verschiedenen hydrophilen Polymeren einzusetzen und insbesondere Mischungen von hydrophilen Polymeren mit unterschiedlichen Molekulargewichten, z.B. Mischungen von Polymeren, deren Molekulargewicht sich um den Faktor 5 oder mehr unterscheidet.

Ein wesentlicher Anteil des hydrophilen zweiten Polymers wird bei der Herstellung der erfindungsgemäßen Hohlfasermembranen aus der Membranstruktur ausgewaschen. Mit Blick auf die hydrophilen Eigenschaften der erfindungsgemäßen Hohlfasermembranen und ihre Benetzbarkeit ist es im Falle der bevorzugten Verwendung eines hydrophoben Polymers als synthetischem erstem Polymer jedoch erforderlich, dass ein bestimmter Anteil des hydrophilen zweiten Polymers in der Membran verbleibt. Im Falle der bevorzugten Verwendung eines hydrophoben Polymers als synthetischem ersten Polymer weisen die fertigen Hohlfasermembranen daher das hydrophile zweite Polymer bevorzugt in einer Konzentration im Bereich zwischen 1 bis 15 Gew.% und besonders bevorzugt zwischen 3 und 10 Gew.-%, bezogen auf das Gewicht der fertigen Hohlfasermembran, auf.

Das hydrophile zweite Polymer kann darüber hinaus in der fertigen Membran noch chemisch oder physikalisch modifiziert werden. So kann beispielsweise Polyvinylpyrrolidon nachträglich durch Vernetzung wasserunlöslich gemacht werden.

Das einzusetzende Lösemittelsystem ist auf das verwendete synthetische hydrophile bzw. das synthetische erste Polymer sowie gegebenenfalls auf das zweite hydrophile Polymer abzustimmen. Erfindungsgemäß umfasst das zur Herstellung der Spinnlösung eingesetzte Lösemittelsystem polare aprotische Lösemittel wie insbesondere Dimethylformamid, Dimethylacetamid, Dimethylsulfoxid, N-Methylpyrrolidon oder ε-Caprolactam oder Mischungen dieser Lösemittel untereinander geeignet. Das Lösemittelsystem kann weitere Cosolventien enthalten, im Falle der Verwendung von ε-Caprolactam haben sich Butyrolacton, Propylencarbonat oder Polyalkylenglykol bewährt. Darüber hinaus kann das Lösemittelsystem Nichtlöser für das Polymer wie z.B. Wasser, Glycerin, Polyethylenglykole oder Alkohole wie Ethanol oder Isopropanol enthalten.

Nach Entgasung und Filtrierung zur Entfernung von nicht gelösten Partikeln wird die homogene Spinnlösung durch den Ringspalt einer üblichen Hohlfadendüse zu einem Hohlfaden extrudiert. Durch die in der Hohlfadendüse koaxial zum Ringspalt angeordnete zentrale Düsenöffnung wird eine Innenfüllung extrudiert, die ein Koagulationsmedium für das hydrophobe erste Polymer ist und die gleichzeitig das Lumen des Hohlfadens stabilisiert.

Die Innenfüllung, d.h. das innere Koagulationsmedium besteht aus einem der zuvor genannten Lösemittel, vorzugsweise einem der auch im Lösemittelsystem der Spinnlösung eingesetzten Lösemittel, oder dem zur Herstellung der Spinnlösung eingesetzten Lösemittelsystem sowie notwendigerweise einem Nichtlöser. Dieser Nichtlöser soll die Koagulation des synthetischen ersten Polymers auslösen, das gegebenenfalls vorhandene hydrophile zweite Polymer jedoch vorzugsweise lösen. Sofern im Lösemittelsystem ein Nichtlöser enthalten ist, kann es sich bei dem in der Innenfüllung enthaltenen um denselben Nichtlöser handeln, wobei natürlich zur Erzielung einer ausreichenden Fällwirkung die Nichtlöserkonzentration in der Innenfüllung gegenüber derjenigen im Lösemittelsystem erhöht ist. Für die Innenfüllung kann jedoch auch ein anderer Nichtlöser als für das Lösemittelsystem eingesetzt werden. Der eingesetzte Nichtlöser kann auch aus mehreren verschiedenen Nichtlöserkomponenten zusammengesetzt sein.

Erfindungsgemäß enthält die Innenfüllung einen Polyelektrolyten mit negativen Festladungen, wobei der Polyelektrolyt in der Innenfüllung in gelöster Form vorliegt. Unter einem Polyelektrolyten mit negativen Festladungen wird im Rahmen der vorliegenden Erfindung ein Polymer verstanden, das funktionelle Gruppen mit negativen Ladungen enthält oder solche Gruppen in einem hinreichend basischen Medium ausbilden kann, wobei die funktionellen Gruppen kovalent an das Polymer gebunden sind. Dadurch sind zwangsläufig auch die negativen Ladungen kovalent und damit fest an das Polymer gebunden.

Wichtig ist, dass der erfindungsgemäß verwendete Polyelektrolyt mit negativen Festladungen tatsächlich ein Polymer mit den vorstehend definierten Eigenschaften ist, also ein Molekül, in dem eine große Zahl, vorzugsweise mindestens einige hundert und besonders bevorzugt mindestens einige tausend Monomereinheiten kovalent verknüpft sind, wodurch ein Molekulargewicht resultiert, das vorzugsweise im Bereich > 7 000 Dalton und besonders bevorzugt im Bereich von > 70 000 Dalton liegt. Der Einsatz von niedermolekularen Elektrolyten mit negativen Festladungen in der Innenfüllung, wie z.B. von Zitronensäure, deren drei Säuregruppen drei negative Ionen bilden können, führt zu Membranen, die keine erhöhte Trennschärfe aufweisen. Ebenso ist es wichtig, dass der erfindungsgemäß eingesetzte Polyelektrolyt negative Festladungen besitzt. Setzt man der Innenfüllung Polyelektrolyte mit positiven Festladungen zu, wie z.B. ein Copolymer aus Vinylpyrrolidon und Methacrylamidopropyltrimethylammoniumchlorid, resultieren Membranen, die ebenfalls keine erhöhte Trennschärfe aufweisen.

In einer bevorzugten Ausführungsform der Erfindung ist der Polyelektrolyt mit negativen Festladungen ausgewählt aus der Gruppe der Polyphosphorsäuren, Polysulfonsäuren oder Polycarbonsäuren, und von letzteren insbesondere Homo- und Copolymere der Acrylsäure. Besonders wirksam hinsichtlich der Verbesserung des Trennverhaltens der Hohlfasermembranen haben sich teilvernetzte Acrylsäuren, Copolymere aus Methacrylsäure und Methylmethacrylat, Copolymere aus Acrylsäure und Vinylpyrrolidon und Copolymere aus Acrylsäure, Vinylpyrrolidon und Laurylmethacrylat erwiesen.

Eine besonders ausgeprägte Erhöhung der Trennschärfe wird beobachtet, wenn der Polyelektrolyt mit negativen Festladungen so ausgewählt wird, dass er in der als Fällungsmittel wirkenden Innenfüllung vollständig löslich ist, nicht aber in den einzelnen Komponenten der Innenfüllung. Ferner wird eine besonders ausgeprägte Erhöhung der Trennschärfe beobachtet, wenn der erfindungsgemäß eingesetzt Polyelektrolyt mit negativen Festladungen so ausgewählt wird, dass er in Kontakt mit der Spinnlösung ausfällt.

Der Polyelektrolyt mit negativen Festladungen in der Innenfüllung liegt in einer Konzentration von 0,01 bis 5 Gew.-% vor, bezogen auf das Gewicht der Innenfüllung. Unterhalb einer Konzentration von 0,01 Gew.% lässt sich die erfindungsgemäße scharfe Trenncharakteristik nicht mehr erreichen. Bei einer Konzentration des erfindungsgemäß eingesetzten Polyelektrolyten oberhalb von 5 Gew.-% ist hingegen die Löslichkeit des Additivs in der Innenfüllung und damit auch eine ausreichende Spinnstabilität nicht mehr gewährleistet. Darüber hinaus führen Konzentrationen oberhalb von 5 Gew.% oftmals zu einer Reduzierung der Permeabilitäten der Membranen. Besonders bevorzugt beträgt die Konzentration des Polyelektrolyten mit negativen Festladungen 0,05 bis 1 Gew.-%.

Die Fällwirkung der Innenfüllung muss so ausgelegt sein, dass es an der Innenseite, d.h. an der dem Lumen zugewandten Seite der Hohlfasermembran, zur Ausbildung einer Trennschicht und einer daran in Richtung auf die Außenseite der Hohlfasermembran angrenzenden Stützschicht kommt. In Kombination mit der Zugabe des Polyelektrolyten mit negativen Festladungen zur Innenfüllung lassen sich erstmals die erfindungsgemäßen Hohlfasermembranen herstellen, die auch nach einer Trocknung und ohne vorherige Behandlung mit einem die Poren in der Membranwand stabilisierenden Zusatz wie z.B. Glycerin die erfindungsgemäß geforderte scharfe Trenncharakteristik mit insbesondere hohen Siebkoeffizienten für Cytochrom C aufweisen. Es wird vermutet, dass der Polyelektrolyt mit negativen Festladungen Einfluss auf die Ausbildung der Trennschicht und insbesondere auf die Ausbildung der Poren in der Trennschicht in Richtung einer engeren Porengrößenverteilung sowie auch Einfluss auf die Oberflächenpolarität der Membran hat. Letzteres wirkt sich in Richtung einer veränderten Sekundärmembran beim Einsatz der erfindungsgemäßen Membranen aus. Es wird des Weiteren vermutet, dass die Änderungen in Bezug auf die Trennschicht auch Ursache für die höhere Sicherheit der erfindungsgemäßen Membranen gegen Pyrogendurchtritt sind.

Dabei ist der Polyelektrolyt mit negativen Festladungen in der Trennschicht physikalisch gebunden. Dies bedeutet, dass besagter Polyelektrolyt nicht chemisch in der Trennschicht der erfindungsgemäßen Membran gebunden ist. Die physikalische Bindung des Polyelektrolyten in der Trennschicht ist so stabil, dass weder das bei der nasschemischen Herstellung der Membran unvermeidliche Waschen, oder Extrahieren, noch das Sterilisieren oder der Einsatz der erfindungsgemäßen Membran zu einem nennenswerten Verlust der Membran an Polyelektrolyt oder gar zu einer an Polyelektrolyt freien Membran führt. Ohne sich auf die folgende Erklärung festlegen lassen zu wollen wird vermutet, dass Verhakungen und Verschlaufungen der Polymerketten des Polyelektrolyten mit den. Polymerketten des membranbildenden Polymers, wie sie z.B. während des erfindungsgemäßen Verfahrens dadurch zustande kommen, dass der in Schritt b) gebildete lösemittelhaltige Hohlfaden an seiner Innenseite mit der polyelektrolythaltigen Innenfüllung in Kontakt gebracht wird, den Polyelektrolyten stabil in der Trennschicht der erfindungsgemäßen Membran verankern.

Über geeignete Nachweismethoden wie z.B. ESCA/XPS, IR-spektroskopischer Nachweise wie Fourier Transform Infrarotspektroskopie (FTIR-ATR) oder durch Umsetzung der sauren Polyelektrolyte mit basischen Farbstoffen

lässt sich feststellen, dass bei den mittels des erfindungsgemäßen Verfahrens hergestellten Hohlfasermembranen der Polyelektrolyt mit negativen Festladungen in der Trennschicht enthalten ist. Der wesentliche Teil der Stützschicht ist hingegen im wesentlichen frei von dem Polyelektrolyten mit negativen Festladungen.

Abhängig von der gewünschten Struktur der an die Trennschicht angrenzenden Stützschicht bzw. im Bereich der äußeren Oberfläche der Hohlfasermembran durchläuft in einer bevorzugten Ausführungsform der Hohlfaden nach seinem Austritt aus der Hohlfadendüse zunächst noch einen Luftspalt durchlaufen, bevor er in ein äußeres Koagulationsbad eintaucht und durch dieses hindurchgeleitet wird. Dabei ist der Luftspalt besonders bevorzugt mit Wasserdampf klimatisiert und temperiert, um hierdurch definierte Bedingungen vor Beginn einer Koagulation an der Außenseite des Hohlfadens einzustellen, z.B. durch eine dosierte Aufnahme von Nichtlöser aus der klimatisierten Atmosphäre, wodurch eine verzögerte Vorkoagulation stattfindet. Die diffusiv induzierte Koagulation kann dann in dem äußeren Fällbad, das vorzugsweise temperiert und vorzugsweise ein wässriges Bad ist, vervollständigt und die Membranstruktur fixiert werden. Das äußere Koagulationsbad kann aber auch allein noch die Aufgabe haben, die Membranstruktur zu fixieren und bereits für eine Extraktion der Hohlfasermembran zu sorgen, wenn der Hohlfaden vor Eintauchen in das äußere Fällbad aufgrund der Fällwirkung der Innenflüssigkeit von innen nach außen durchgefällt ist. Anstelle der Verwendung eines die Koagulation an der Außenseite verlangsamenden klimatisierten Luftspalts kann auch direkt in ein äußeres Koagulationsbad extrudiert werden, das eine geringere Fällwirkung ausübt als die Innenfüllung.

Im Anschluss an die Koagulation und die Fixierung der Membranstruktur wird die so entstandene Hohlfasermembran extrahiert, um sie von Resten des Lösemittelsystems und weiterer löslicher organischer Substanzen zu befreien. Bei Verwendung eines hydrophilen zweiten Polymer wird bei der Extraktion in der Regel auch ein wesentlicher Anteil des hydrophilen zweiten Polymers entfernt. Im Falle der Verwendung eines hydrophoben ersten Polymers verbleibt aber zur Gewährleistung einer genügenden Hydrophilie und Benetzbarkeit ein Anteil des hydrophilen zweiten Polymers in der erfindungsgemäßen Membran. Vorzugsweise beträgt die Konzentration an hydrophilem zweiten Polymer dann 1 bis 15 Gew.-%, bezogen auf das Gewicht der erfindungsgemäßen Membran und besonders bevorzugt 3 bis 10 Gew.-%.

Nach der Extraktion werden die Hohlfasermembranen getrocknet, gegebenenfalls texturiert, um die Austauscheigenschaften der Hohlfasermembranen im späteren Bündel zu verbessern, und letztlich nach den üblichen Verfahren z. B. auf eine Spule gewickelt oder zu Bündeln mit geeigneter Fadenzahl und Länge verarbeitet. Vor der Herstellung der Bündel können zu den Hohlfasermembranen auch Beilegfäden z.B. in Form von Multifilamentgarnen gegeben werden, um so für eine Beabstandung der Hohlfasermembranen untereinander und für eine bessere Umströmbarkeit der einzelnen Hohlfasermembranen zu sorgen.

Es ist auch möglich, das in der erfindungsgemäßen Hohlfasermembran verbliebene hydrophile zweite Polymer z.B. durch Bestrahlung und/oder Anwendung von Hitze zu vernetzen, um es unlöslich zu machen und ein Auswaschen des hydrophilen Polymers in der späteren Anwendung zu vermeiden. Hierzu können die üblichen aus dem Stand der Technik bekannten Methoden angewendet werden.

In einer bevorzugten Ausführungsform der erfindungsgemäßen Hohlfasermembran erstreckt sich die Stützschicht von der Trennschicht ausgehend über im wesentlichen die gesamte Wand der Hohlfasermembran und weist eine schwammartige Struktur auf, die frei von Fingerporen ist. Solche Membranen besitzen gegenüber Membranen mit kavemenartigen, großen Poren, d.h. mit einer Struktur mit Fingerporen, eine höhere mechanische Festigkeit auf. Hierdurch können geringere Wandstärken und daraus resultierend ein größerer Bereich in Bezug auf die hydraulische Permeabilität der erfindungsgemäßen Membranen realisiert werden.

Vorzugsweise beträgt der Innendurchmesser der erfindungsgemäßen Membranen 100 bis 500 $\mu$m und besonders bevorzugt 150 bis 300 $\mu$m. Die Wandstärke liegt bevorzugt zwischen 10 und 60 $\mu$m und besonders bevorzugt zwischen 25 und 45 $\mu$m.

In einer weiteren bevorzugten Ausgestaltung der Erfindung schließt sich an die schwammartige Stützschicht an der der Trennschicht abgewandten Seite eine Schicht an, deren Poren eine im Vergleich zu den Poren in der Stützschicht geringere Porengröße aufweisen bzw. in der die Porengröße in Richtung auf die Außenseite abnimmt oder dir Struktur der schwammartigen Stützschicht verdichtet sich im äußeren Bereich der Membranwand zur äußeren Oberfläche hin. Membranen mit derartigen Porenstrukturen werden in der EP 828 553 beschrieben, auf deren Offenbarungsgehalt, wie bereits ausgeführt wurde, ausdrücklich Bezug genommen wird.

Die Erfindung soll anhand der im folgenden beschriebenen Beispiele näher erläutert werden.

In den Beispielen wurden folgende Methoden zur Charakterisierung der erhaltenen Membranen angewandt:

<u>Ultrafiltrationsrate in Albuminlösung, Siebkoeffizienten für Cytochrom C und Albumin</u>

Die Ultrafiltrationsrate in Albuminlösung (BSA-Lösung), im folgenden $UFR_{Alb}$ genannt, sowie die Siebkoeffizienten für Cytochrom C, $SK_{cc}$, und für Albumin, $SK_{Alb}$, werden in Anlehnung an die DIN 58 353 Teil 2 vorgenommen.

Als Prüflösung wird eine phosphatgepufferte Kochsalzlösung (PBS) mit 50 g/l Rinderserumalbumin (BSA) und 100 mg/l Cytochrom C eingesetzt. Die Rezeptur der PBS-Lösung entstammt dem Deutschen Arzneimittelbuch (DAB 10, 1. Nachtrag 1992 VII.I.3 "Phosphat-Pufferlösung pH 7,4, natriumchloridhaltige R"). Die Messung erfolgt an Hohlfasermembranmodulen mit einer effektiven Membranfläche von ca. 250 $cm^2$ und einer effektiven Hohlfasermembranlänge von 180 mm. Die Messungen werden bei 37 °C durchgeführt. Über eine erste Pumpe an der Einlaufseite des Membranmoduls wird ein Volumenstrom $Q_B$ durch die Hohlfasermembranen von 200 ml/(min·$m^2$) und durch Regelung einer zweiten Pumpe an der Auslaufseite des Membranmoduls im Verhältnis zur ersten Pumpe an der Einlaufseite ein Filtratfluss $Q_F$ über die Membranwand von 10 ml/(min·$m^2$) eingestellt. Der sich als Folge des Filtratflusses.QF einstellende Transmembrandruck TMP wird während der Messung erfasst.

Die $UFR_{Alb}$ ergibt sich nach der folgenden Formel:

$$UFR_{Alb} = \frac{Q_F \cdot 60}{TMP \cdot 0{,}75} \; [ml/(h \cdot m^2 \cdot mmHg)],$$

mit

$Q_F$ = Filtratfluss, bezogen auf 1 $m^2$ effektive Membranfläche in [ml/(min·$m^2$)]
TMP = Transmembrandruck in [hPa]

Die Bestimmung der Siebkoeffizienten SK erfolgt nach der Formel:

$$SK = \frac{2 \cdot c_F}{c_{ST} + c_R},$$

mit

$c_F$ = Konzentration des Albumins bzw. des Cytochrom C im Filtrat
$c_{ST}$ = Stammkonzentration des Albumins bzw. des Cytochrom C
$c_R$ = Konzentration des Albumins bzw. des Cytochrom C im Retentat.

Die Konzentration von BSA wird mit einer Methode von Boehringer Mannheim mittels eines Automatic Analyzers für klinische Chemie wie z.B. des Hitachi 704 Automatic Analyzers bestimmt. Als Testprinzip wird eine Bromcresolgrün-Methode verwendet. Auch Cytochrom C wird mittels des Hitachi 704 bestimmt. Zur Eliminierung der Störung der Extinktion für Cytochrom C bei der Wellenlänge $\lambda$= 415 nm durch BSA muss zunächst eine Verdünnungsreihe von BSA in PBS von 0 bis ca. 80 g/l BSA vermessen werden und der Steigungsfaktor der Geraden aus der Extinktion bei $\lambda$= 415 nm über der Konzentration BSA ermittelt werden. Der Korrekturfaktor ergibt sich aus dem Steigungsfaktor und der aktuellen Konzentration $c_{ST}$ für BSA in der Probe.

**Vergleichsbeispiel 1**

Zur Herstellung einer Spinnlösung wurden 19,0 Gew.-% Polyethersulfon (Ultrason E 6020, Fa. BASF), 13,68 Gew.-% Polyvinylpyrrolidon (PVP K30, Fa. ISP), 31,98 Gew.-% $\varepsilon$-Caprolactam, 31,98 Gew.-% $\gamma$-Butyrolacton und 3,36 Gew.-% Glycerin bei einer Temperatur von ca. 100°C intensiv gemischt. Die resultierende homogene Lösung wurde auf ca. 60°C abgekühlt, entgast, filtriert und dem Ringspalt einer Hohlfadendüse zugeführt, die auf 62°C temperiert war. Zur Ausbildung von Lumen und innenliegender Trennschicht wurde durch die Düsennadel der Hohlfadendüse eine Innenfüllung gefördert, die aus $\varepsilon$-Caprolactam / Wasser im Gewichtsverhältnis 55:45 bestand. Der ausgeformte Hohlfaden wurde durch einen Klimakanal (Klima: ca. 55°C; 80 % relative Luftfeuchte) geführt, in einem auf ca. 55 °C temperierten Wasser enthaltenden Fällbad ausgefällt und fixiert, mit ca. 90 °C warmem Wasser gewaschen und schließlich bei ca. 90°C getrocknet. Es resultiert eine Hohlfasermembran mit einem Lumendurchmesser von ca. 0,2 mm und einer Wanddicke von ca. 0,035 mm.

**Beispiel 1**

Es wurde eine Hohlfasermembran wie in Vergleichsbeispiel 1 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst war. Zur Herstellung der Innenfüllung wurde zuerst das Gemisch aus ε-Caprolactam/Wasser vorgelegt und in diesem Gemisch das Acrylidone ACP 1005 gelöst.

In Tabelle 1 sind $UFR_{Alb}$, $SK_{cc}$ und $SK_{Alb}$ der Hohlfasermembranen aus Vergleichsbeispiel 1 und aus Beispiel 1 zusammengefasst.

**Tabelle 1**

| Membran aus | Polyelektrolyt in der Innenfüllung | $UFR_{Alb}$ ml/(h·m$^2$·mmHg) | $SK_{Alb}$ | $SK_{cc}$ |
|---|---|---|---|---|
| Vergleichsbeispiel 1 | - | 13,1 | 0,002 | 0,305 |
| Beispiel 1 | 0,5 Gew.% ACP 1005 | 14,4 | 0,001 | 0,846 |

Wie Tabelle 1 zeigt, entsteht durch den Zusatz des Polyelektrolyten zur Innenfüllung eine Hohlfasermembran, die eine beträchtlich erhöhte Selektivität für die Trennung von Albumin und Cytochrom C aufweist.

**Vergleichsbeispiel 2**

Zur Herstellung einer Polyethersulfonmembran wurde aus 19,0 Gew.% Polyethersulfon (Ultrason E 6020, Fa. BASF), 4,75 Gew.-% Polyvinylpyrrolidon (PVP K90, Fa. ISP), 68,62 Gew.-% Dimethylacetamid (DMAC) und 7,63 Gew.-% Glycerin durch intensives Rühren bei einer Temperatur von ca. 70 °C ein homogene Spinnlösung hergestellt. Die resultierende Lösung wurde auf ca. 50°C abgekühlt, entgast, filtriert und dem Ringspalt einer auf 45 °C temperierten Hohlfadendüse zugeführt. Durch die Düsennadel der Hohlfadendüse wurde eine Innenfüllung gefördert, die aus 30 Gewichtsteilen DMAC, 65 Gewichtsteilen Wasser und 5 Gewichtsteilen Glycerin bestand. Der ausgeformte Hohlfaden wurde durch einen Klimakanal (Klima: 50°C; 90 % relative Luftfeuchte) geführt und in auf 70°C temperiertem Wasser ausgefällt und fixiert, mit ca. 90 °C warmem Wasser gewaschen und schließlich bei ca. 90°C getrocknet. Es resultierte eine Hohlfasermembran mit einem Lumendurchmesser von 0,2 mm und einer Wanddicke von 0,035 mm. Die Eigenschaften der so erhaltenen Hohlfasermembran sind in der Tabelle 2 zusammengestellt.

**Beispiel 2**

Es wurde eine Hohlfasermembran wie in Vergleichsbeispiel 2 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wurde zuerst das Acrylidone ACP 1005 im Dimethylacetamid verteilt, anschließend das Wasser hinzugegeben und bei ca. 70°C eine homogene Lösung hergestellt. Die Lösung wurde schließlich auf 30°C abgekühlt.

In Tabelle 2 sind $UFR_{Alb.}$ $SK_{cc}$ und $SIC_{Alb}$ der Hohlfasermembranen aus Vergleichsbeispiel 2 und aus Beispiel 2 zusammengefasst.

Tabelle 2

| Membran aus | Polyelektrolyt in der Innenfüllung | $UFR_{Alb}$ ml/(h·m$^2$·mmHg) | $SK_{Alb}$ | $SK_{cc}$ |
|---|---|---|---|---|
| Vergleichsbeispiel 2 | - | 11,7 | 0,002 | 0,211 |
| Beispiel 2 | 0,5 Gew.-% ACP 1005 | 12,6 | 0,001 | 0,830 |

**Beispiele 3a - h**

In einem Rührbehälter wurde aus 19,0 Gew.-% Polyethersulfon (Ultrason E 6020, Fa. BASF), 13,3 Gew.-% Polyvinylpyrrolidon (PVP K30, Fa. ISP), 62,96 Gew.-% N-Methylpyrrolidon (NMP) und 4,74 Gew.% Wasser unter intensivem Rühren bei einer Temperatur von ca. 70°C eine homogene Spinnlösung hergestellt. Die Lösung wurde auf ca. 50°C abgekühlt, filtriert, entgast und dem Ringspalt einer auf 45°C temperierten Hohlfadendüse zugeführt. Zur Ausbildung von Lumen und innenliegender Trennschicht wird durch die Düsennadel der Hohlfadendüse eine aus NMP und Wasser bestehende Innenfüllung gefördert.

Es wurden acht verschiedene Membranen mit unterschiedlichen Ultrafiltrationsraten in Albuminlösung hergestellt. Hierzu wurde die Zusammensetzung der Innenfüllung hinsichtlich der Gewichtsanteile NMP:Wasser stufenweise im Bereich von 45:55 bis 52:48 variiert. Außer NMP und Wasser war in der Innenfüllung ein Zusatz von jeweils 0,1 Gew. %, bezogen auf ihr Gewicht, des Polyelektrolyten Rohagit S hv (Fa. Degussa/Röhm) gelöst. Zur Herstellung der Innenfüllung wurde jeweils zuerst das Rohagit S hv im NMP verteilt, nach Zugabe von Wasser bei ca. 70 °C gelöst und anschließend auf 30°C abgekühlt.
Der jeweilige ausgeformte Hohlfaden wurde durch einen Klimakanal (Klima: 50°C; 90 % relative Luftfeuchte) geführt und in einem auf ca. 70 °C temperierten Wasserbad ausgefällt. Nach Waschen mit 80 °C warmem Wasser und Trocknen mit Heißluft resultieren Hohlfasermembranen mit einem Lumendurchmesser von 0,2 mm und einer Wanddicke von 0,035 mm. In Tabelle 3 sind $UFR_{Alb}$, $SK_{cc}$ und $SK_{Alb}$ der Hohlfasermembranen aus Beispielen 3a - h zusammengefasst.

Tabelle 3

| Membran aus | $UFR_{Alb}$ ml/(h·m$^2$·mmHg) | $SK_{Alb}$ | $SK_{cc}$ |
|---|---|---|---|
| Beispiel 3a | 5,0 | 0,001 | 0,470 |
| Beispiel3b | 7,8 | 0,001 | 0,734 |
| Beispiel3c | 10,7 | 0,001 | 0,760 |
| Beispiel 3d | 12,1 | 0,001 | 0,850 |
| | | | |
| Beispiel 3e | 15,8 | 0,000 | 0,920 |
| Beispiel 3f | 16,1 | 0,001 | 0,980 |
| Beispiel 3g | 17,7 | 0,001 | 0,870 |
| Beispiel 3h | 23,5 | 0,001 | 0,920 |

Die $SK_{cc}$ der Beispiele 3a - h sind in der Figur 1 über der $UFR_{Alb}$ dargestellt. Wie erkennbar ist, liegen die erhaltenen Werte für $SK_{cc}$ jeweils über den anspruchsgemäßen Grenzkurven für den $SK_{cc}$ in Abhängigkeit von der $UFR_{Alb}$.
Zum Vergleich wurden analog zu den Beispielen 3 a bis h Hohlfasermembranen mit Innenfüllungen hergestellt, die kein Rohagit S hv enthielten. Für den Bereich der Ultrafiltrationsrate, der einer konventionellen Low-Flux Hemodialyse zuzuordnen wäre, d.h. im Bereich $UFR_{Alb}$ von ca. 4 bis unterhalb ca. 15 ml/(h·m$^2$·mmHg) wurden bei jeweils einem $SK_{Alb}$ von 0,001 $SK_{cc}$ im Bereich zwischen 0,050 und 0,250 erhalten. Für Membranen, die z.B. in der konventionellen Hemodiafiltration mit geringen Austauschvolumina Verwendung finden würden, d.h. mit einer $UFR_{Alb}$ im Bereich vom ca. 15 bis ca. 23,5 ml/(h·m$^2$·mmHg), wurden bei $SK_{Alb}$ von 0,001 $SK_{cc}$ im Bereich zwischen 0,25 bis 0,5 ermittelt.

**Vergleichsbeispiel 4**

Zur Herstellung einer homogenen Spinnlösung wurden 19,0 Gew.-% Polyethersulfon (Ultrason E 6020, Fa. BASF), 13,3 Gew.-% Polyvinylpyrrolidon (PVP K30, Fa. ISP), 62,96 Gew.% N-Methylpyrrolidon (NMP) und 4,74 Gew.-% Wasser bei einer Temperatur von ca. 60 °C intensiv gerührt. Die resultierende Lösung wurde entgast, filtriert und dem Ringspalt einer auf 45 °C temperierten Hohlfadendüse zugeführt. Zur Ausbildung von Lumen und Trennschicht wurde durch die Düsennadel der Hohlfadendüse eine Innenfüllung aus 44 Gewichtsteilen NMP und 56 Gewichtsteilen Wasser gefördert. Der ausgeformte Hohlfaden wurde nach Austritt aus der Düse durch einen Klimakanal (Klima: 55 °C; 70 % relative Luftfeuchte) geführt und in einem auf 58 °C temperierten Wasserbad ausgefällt. Nach Waschen mit 90°C warmem Wasser und Trocknen mit Heißluft resultierte eine Hohlfasermembran mit einem Lumendurchmesser von 0,2 mm und einer Wanddicke von 0,03 mm.

**Beispiel 4**

Es wurde eine Hohlfasermembran wie in Vergleichsbeispiel 4 hergestellt, jedoch mit dem Unterschied, dass die Innenfüllung aus 43,87 Gewichtsteilen NMP, 55,88 Gewichtsteilen Wasser sowie einem Zusatz von 0,25 Gewichtsteilen Styleze 2000 bestand.
In Tabelle 4 sind $UFR_{Alb}$, $SK_{Alb}$ und $SK_{cc}$ der Membranen von Vergleichsbeispiel 4 und Beispiel 4 zusammengefasst.

Tabelle 4

| Membran aus | Polyelektrolyt in der Innenfüllung | $UFR_{Alb}$ ml/(h·m²·mmHg) | $SK_{Alb}$ | $SK_{cc}$ |
|---|---|---|---|---|
| Vergleichsbeisp iel 4 | - | 12,28 | 0,003 | 0,129 |
| Beispiel 4 | 0,25 Gew.% Styleze 2000 | 11,04 | 0,002 | 0,784 |

**Vergleichsbeispiel 5**

Aus 19,0 Gew.% Polysulfon (Ultrason S 6010, Fa. BASF), 13,3 Gew.-% Polyvinylpyrrolidon (PVP K30, Fa. ISP), 65,87 Gew.-% N-Methylpyrrolidon (NMP) und 1,83 Gew.-% Wasser wurde eine homogene Spinnlösung hergestellt. Hierzu wurde das Polysulfon zunächst im überwiegenden Teil des NMP bei einer Temperatur von 70°C eingerührt und anschließend bei einer Temperatur von 90°C homogen gelöst. Danach wurde das PVP K30 unter Rühren zugegeben und ebenfalls gelöst. Die resultierende Lösung wurde auf 50°C abgekühlt, und anschließend wurden das Wasser sowie die restliche Menge NMP zugegeben. Die so erhaltene homogene Lösung wurde entgast, filtriert und dem Ringspalt einer Hohlfadend üse zugeführt, die auf 40 °C temperiert war. Durch die Düsennadel der Hohlfadendüse wurde eine Innenfüllung gefördert, die aus 60 Gewichtsteilen NMP und 40 Gewichtsteilen Wasser bestand. Der ausgeformte Hohlfaden wurde durch einen Klimakanal (Klima: 50 °C; 90 % relative Luftfeuchte) geführt und Fällbad mit auf 70 °C temperiertem Wasser ausgefällt und fixiert sowie anschließend gewaschen und getrocknet. Es resultierte eine Hohlfasermembran mit einem Lumendurchmesser von 0,2 mm und einer Wanddicke von 0,035 mm.

**Beispiel 5**

Es wurde eine Polysulfon-Hohlfasermembran wie in Vergleichsbeispiel 5 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wird zuerst das Acrylidone ACP 1005 im NMP verteilt, anschließend das Wasser hinzugegeben und bei ca. 70°C eine homogene Lösung hergestellt. Die Lösung wurde schließlich auf 30°C abgekühlt.

In Tabelle 5 sind $UFR_{Alb}$, $SK_{cc}$ und $SK_{Alb}$ der Hohlfasermembranen aus Vergleichsbeispiel 5 und aus Beispiel 5 zusammengefasst.

Tabelle 5

| Membran aus | Polyelektrolyt in der Innenfüllung | $UFR_{Alb}$ ml/(h·m²·mmHg) | $SK_{Alb}$ | $SK_{cc}$ |
|---|---|---|---|---|
| Vergleichsbeispiel 5 | - | 12,9 | 0,017 | 0,470 |
| Beispiel 5 | 0,5 Gew.-% ACP 1005 | 17,7 | 0,003 | 0,890 |

**Vergleichsbeispiel 6**

Es wurde eine homogene Spinnlösung aus 19,0 Gew.-% Polyphenylensulfon (Radel R 5000 NT, Fa. Solvay), 13,3 Gew.-% Polyvinylpyrrolidon (PVP K30, Fa. ISP), 64,32 Gew.-% N-Methylpyrrolidon (NMP) und 3,38 Gew.-% Wasser hergestellt. Hierzu wurde das Polyphenylensulfon zunächst im überwiegenden Teil des NMP bei einer Temperatur von 70°C eingerührt und anschießend bei 90°C homogen gelöst. Danach das PVP K30 unter Rühren zugegeben und ebenfalls gelöst. Die resultierende Lösung wurde auf 50°C abgekühlt, und anschließend wurden das Wasser sowie die restliche Menge NMP zugegeben. Die so erhaltene homogene Lösung wurde entgast, filtriert und dem Ringspalt einer Hohlfadendüse zugeführt, die auf 45 °C temperiert war. Durch die Düsennadel der Hohlfadendüse wurde eine Innenfüllung gefördert, die aus 63 Gewichtsteilen NMP und 37 Gewichtsteilen Wasser bestand. Der ausgeformte Hohlfaden wurde durch einen Klimakanal (Klima: 50°C; 90 % relative Luftfeuchte) geführt und in einem auf 70 °C temperierten Fällbad mit Wasser ausgefällt. Nach Waschen mit 90°C warmem Wasser und Trocknen resultierte eine Hohlfasermembran mit einem Lumendurchmesseer von 0,2 mm und einer Wanddicke von 0,035 mm. Die Eigenschaften der so erhaltenen Hohlfasermembran sind in der Tabelle 6 zusammengestellt.

**Beispiel 6**

Es wurde eine Polyphenylensulfon -Hohlfasermembran wie in Vergleichsbeispiel 6 hergestellt, jedoch mit dem Unterschied, dass in der Innenfüllung, bezogen auf ihr Gewicht, zusätzlich 0,5 Gew.-% des Polyelektrolyten Acrylidone ACP 1005 (Fa. ISP) gelöst waren. Zur Herstellung der Innenfüllung wurde zuerst das Acrylidone ACP 1005 im NMP

verteilt, anschließend das Wasser hinzugegeben und bei ca. 70°C eine homogene Lösung hergestellt. Die Lösung wurde schließlich auf 30°C abgekühlt.

In Tabelle 6 sind $UFR_{Alb}$, $SK_{cc}$ und $SK_{Alb}$ dieser Hohlfasermembranen zusammengefasst.

Tabelle 6

| Membran aus | Polyelektrolyt in der Innenfüllung | $UFR_{Alb}$ ml/(h·M$^2$·mmHg) | $SK_{Alb}$ | $SK_{cc}$ |
|---|---|---|---|---|
| Vergleichsbeispiel 6 | - | 20,7 | 0,012 | 0,640 |
| Beispiel 6 | 0,5 Gew.-% ACP 1005 | 20,6 | 0,003 | 0,930 |

## Patentansprüche

1. Hydrophile, mit Wasser benetzbare, semipermeable Hohlfasermembran zur Blutreinigung auf Basis eines die Membranstruktur aufbauenden synthetischen hydrophilen Polymers oder einer Kombination aus einem die Membranstruktur aufbauenden synthetischen ersten Polymer und einem hydrophilen zweiten Polymer, wobei das synthetische erste Polymer in der Kombination hydrophil oder hydrophob sein kann und das hydrophile zweite Polymer im Falle, dass das synthetische erste Polymer hydrophob ist, die Hydrophilie der Hohlfasermembran gewährleistet, wobei die Hohlfasermembran über ihre Wand eine offenporige integral asymmetrische Struktur und an ihrer dem Lumen zugewandten Innenoberfläche eine Poren aufweisende Trennschicht von 0,1 bis 2 μm Dicke sowie an die Trennschicht angrenzend eine offenporige Stützschicht besitzt sowie eine Ultrafiltrationsrate in Albuminlösung $UFR_{Alb}$ im Bereich von 5 bis 25 ml/(h·m$^2$·mmHg) aufweist,
**dadurch gekennzeichnet, dass** in der Trennschicht ein Polyelektrolyt mit negativen Festladungen physikalisch gebunden ist und dass die Hohlfasermembran ohne Zusätze, die die Poren in der Membranwand stabilisieren, und nach einer vorherigen Trocknung einen Siebkoeffizienten für Albumin $SK_{Alb}$ von höchstens 0,005 aufweist in Verbindung mit einem Siebkoeffizienten für Cytochrom $CSK_{cc}$, für den die Beziehung gilt

$$SK_{CC} \geq 5\cdot10^{-5}\cdot UFR_{Alb}^3 - 0,004\cdot UFR_{Alb}^2 + 0,1081\cdot UFR_{Alb} - 0,25$$

wobei $UFR_{Alb}$, $SK_{cc}$ und $SK_{alb}$ nach den im der Beschreibung angegebenen Methoden zu ermitteln sind.

2. Hohlfasermembran nach Anspruch 1, **dadurch gekennzeichnet, dass** sie einen Siebkoeffizienten für Cytochrom C aufweist, der die Beziehung

$$SK_{CC} \geq 5\cdot10^{-5}\cdot UFR_{Alb}^3 - 0,004\cdot UFR_{Alb}^2 + 0,1081\cdot UFR_{Alb} - 0,12$$

erfüllt.

3. Hohlfasermembran nach einem oder beiden der Ansprüche 1 oder 2, **dadurch gekennzeichnet, dass** sie ein die Membranstruktur aufbauendes hydrophobes erstes Polymer und ein hydrophiles zweites Polymer umfasst.

4. Hohlfasermembran nach Anspruch 3, **dadurch gekennzeichnet, dass** das hydrophobe erste Polymer ein aromatisches Sulfonpolymer wie z.B. Polysulfon, Polyethersulfon, Polyphenylensulfon oder Polyarylethersulfon, ein Polycarbonat, Polyimid, Polyetherimid, Polyetherketon, Polyphenylensulfid oder ein Copolymer oder eine Mischung dieser Polymere ist.

5. Hohlfasermembran nach Anspruch 4, **dadurch gekennzeichnet, dass** das hydrophobe erste Polymer ein Polysulfon oder ein Polyethersulfon ist.

6. Hohlfasermembran nach einem oder mehreren der Ansprüche 1 bis 5, **dadurch gekennzeichnet, dass** das hydrophile zweite Polymer Polyvinylpyrrolidon, Polyethylenglykol, Polyvinylalkohol, Polyglykolmonoester, Polysorbitat, Carboxylmethylcellulose oder ein Copolymer dieser Polymere ist.

7. Hohlfasermembran nach einem oder mehreren der Ansprüche 1 bis 6, **dadurch gekennzeichnet, dass** sich die

Stützschicht von der Trennschicht ausgehend über im wesentlichen die gesamte Wand der Hohlfasermembran erstreckt, eine schwammartige Struktur aufweist und die frei von Fingerporen ist.

**8.** Hohlfasermembran nach einem oder mehreren der Ansprüche 1 bis 7, **dadurch gekennzeichnet, dass** sie einen Siebkoeffizienten für Albumin von höchstens 0,003 aufweist.

**9.** Hohlfasermembran nach einem oder mehreren der Ansprüche 1 bis 8 mit einer Ultrafiltrationsrate in Albuminlösung im Bereich von 10 bis 25 ml/(h·m$^2$·mmHg).

**10.** Verfahren zur Herstellung hydrophilen, mit Wasser benetzbaren semipermeablen Hohlfasermembran, wobei das Verfahren die Schritte umfasst

a. Herstellung einer homogenen Spinnlösung umfassend 12 bis 30 Gew.-%, bezogen auf das Gewicht der Spinnlösung, eines synthetischen hydrophilen Polymers oder 12 bis 30 Gew.-%, bezogen auf das Gewicht der Spinnlösung, eines synthetischen ersten Polymers in Kombination mit 0,1 bis 30 Gew.%, bezogen auf das Gewicht der Spinnlösung, eines hydrophilen zweiten Polymers, wobei das synthetische erste Polymer in Falle der Kombination hydrophil oder hydrophob sein kann, sowie gegebenenfalls weitere Additive in einem Lösemittelsystem,
b. Extrusion der Spinnlösung durch den Ringspalt einer Hohlfadendüse zu einem Hohlfaden,
c. Extrusion einer Innenfüllung durch die zentrale Öffnung der Hohlfadendüse, wobei die Innenfüllung ein Koagulationsmedium für das synthetische erste Polymer ist, welches ein Lösemittel sowie ein Nichtlösemittel für das synthetische erste Polymer umfasst,
d. Inkontaktbringen der Innenfüllung mit der Innenseite des Hohlfadens zur Auslösung der Koagulation im Inneren des Hohlfadens und zur Ausbildung einer Trennschicht an der Innenseite des Hohlfadens und der Membranstruktur,
e. Hindurchleiten des Hohlfadens durch ein Koagulationsbad, um gegebenenfalls die Ausbildung der Membranstruktur zu vervollständigen und um die Membranstruktur zu fixieren,
f. Extraktion der so gebildeten Hohlfasermembran zur Entfernung des Lösemittelsystems sowie löslicher Substanzen,
g. Trocknung der Hohlfasermembran,
wobei die Verfahrensschritte so durchzuführen sind, dass eine Hohlfasermembran gemäß Anspruch 1 mit einer Ultrafiltrationsrate in Albuminlösung im Bereich von 5 bis 25 ml/(h·m$^2$·mmHg) und einem Siebkoeffizienten für Albumin von höchstens 0,005 in Verbindung mit einem Siebkoeffizienten für Cytochrom C erhalten wird, für den die Beziehung

$$SK_{CC} \geq 5\cdot10^{-5}\cdot UFR_{Alb}^3 - 0{,}004\cdot UFR_{Alb}^2 + 0{,}1081\cdot UFR_{Alb} - 0{,}25$$

gilt **dadurch gekennzeichnet, dass** die Innenfüllung einen Polyelektrolyten mit negativen Festladungen mit einen Gewichtsanteil von 0,01-1 Gew.-% bezogen auf das Gewicht der Innenfüllung enthält.

**11.** Verfahren nach Anspruch 10, **dadurch gekennzeichnet, dass** die Spinnlösung 12 bis 30 Gew.-%, bezogen auf das Gewicht der Spinnlösung, eines hydrophoben ersten Polymers in Kombination mit 0,1 bis 30 Gew.-%, bezogen auf das Gewicht der Spinnlösung, eines hydrophilen zweiten Polymers enthält.

**12.** Verfahren nach Anspruch 11, **dadurch gekennzeichnet, dass** als erstes hydrophobes Polymer ein aromatisches Sulfonpolymer wie z.B. Polysulfon, Polyethersulfon, Polyphenylensulfon oder Polyarylethersulfon, ein Polycarbonat, Polyimid, Polyetherimid, Polyetherketon, Polyphenylensulfid, ein Copolymer oder eine Mischung dieser Polymere eingesetzt wird.

**13.** Verfahren nach einem oder mehreren der Ansprüche 10 bis 12, **dadurch gekennzeichnet, dass** als zweites hydrophiles Polymer Polyvinylpyrrolidon, Polyethylenglykol, Polyvinylalkohol, Polyglykolmonoester, Polysorbitat, Carboxylmethylcellulose oder ein Copolymer dieser Polymere eingesetzt wird.

**14.** Verfahren nach einem oder mehreren der Ansprüche 10 bis 13, **dadurch gekennzeichnet, dass** das Lösemittelsystem ein polares aprotisches Lösemittel umfasst.

**15.** Verfahren nach einem oder mehreren der Ansprüche 10 bis 14, **dadurch gekennzeichnet, dass** der Polyelektrolyt ausgewählt ist aus der Gruppe der Polyphosphorsäuren, der Polysulfonsäuren oder der Polycarbonsäuren.

**16.** Verfahren nach Anspruch 15, **dadurch gekennzeichnet, dass** die Polycarbonsäuren Homo- oder Copolymere der Acrylsäure sind.

## Claims

**1.** A hydrophilic, water-wettable, semipermeable hollow-fibre membrane for blood purification based on a synthetic hydrophilic polymer constituting the membrane structure or a combination of a synthetic first polymer constituting the membrane structure and a hydrophilic second polymer, whereby the synthetic first polymer in the combination can be hydrophilic or hydrophobic and the hydrophilic second polymer provides for the hydrophilicity of the hollow-fibre membrane in the case that the synthetic first polymer is hydrophobic, the hollow-fibre membrane having an open-pored integrally asymmetric structure across its wall, a porous separating layer of thickness between 0.1 and 2 μm on its inner surface facing the lumen, and an open-pored supporting layer adjoining the separating layer, and having an ultrafiltration rate in albumin solution, $UFR_{Alb}$, in the range of 5 to 25 ml/(h·m$^2$·mmHg), **characterised in that** a polyelectrolyte with negative fixed charges is physically bound in the separating layer, and that the hollow-fibre membrane, in the absence of additives stabilising the pores in the membrane wall and after prior drying, has a maximum sieving coefficient for albumin, $SC_{Alb}$, of 0.005 combined with a sieving coefficient for cytochrome c, $SC_{cc}$, that satisfies the equation

$$SC_{CC} \geq 5 \cdot 10^{-5} \cdot UFR_{Alb}^3 - 0.004 \cdot UFR_{Alb}^2 + 0.1081 \cdot UFR_{Alb} - 0.25$$

whereby $UFR_{Alb}$, $SC_{cc}$ and $SC_{Alb}$ are to be determined by the methods given in the description.

**2.** Hollow-fibre membrane according to Claim 1, **characterised in that** it has a sieving coefficient for cytochrome c that satisfies the equation

$$SC_{CC} \geq 5 \cdot 10^{-5} \cdot UFR_{Alb}^3 - 0.004 \cdot UFR_{Alb}^2 + 0.1081 \cdot UFR_{Alb} - 0.12$$

**3.** Hollow-fibre membrane according to one or both of Claims 1 and 2, **characterised in that** it comprises a hydrophobic first polymer constituting the membrane structure and a hydrophilic second polymer.

**4.** Hollow-fibre membrane according to Claim 3, **characterised in that** the hydrophobic first polymer is an aromatic sulfone polymer (such as polysulfone, polyethersulfone, polyphenylenesulfone or polyarylethersulfone), a polycarbonate, polyimide, polyetherimide, polyetherketone, polyphenylenesulfide or a copolymer or mixture of these polymers.

**5.** Hollow-fibre membrane according to Claim 4, **characterised in that** the hydrophobic first polymer is a polysulfone or a polyethersulfone.

**6.** Hollow-fibre membrane according to one or more of Claims 1 to 5, **characterised in that** the hydrophilic second polymer is polyvinylpyrrolidone, polyethylene glycol, polyvinyl alcohol, polyglycol monoester, polysorbate, carboxylmethylcellulose, or a copolymer of these polymers.

**7.** Hollow-fibre membrane according to one or more of Claims 1 to 6, **characterised in that** the supporting layer extends from the separating layer across essentially the entire wall of the hollow-fibre membrane, has a sponge-like structure and is free from finger pores.

**8.** Hollow-fibre membrane according to one or more of Claims 1 to 7, **characterised in that** it has a maximum sieving coefficient for albumin of 0.003.

**9.** Hollow-fibre membrane according to one or more of Claims 1 to 8 with an ultrafiltration rate in albumin solution in

the range of 10 to 25 ml/(h·m$^2$·mmHg).

**10.** Method for producing a hydrophilic, water-wettable, semipermeable hollow-fibre membrane, comprising the following steps:

a. preparing a homogeneous spinning solution comprising 12 to 30 wt.%, relative to the weight of the spinning solution, of a synthetic hydrophilic polymer or 12 to 30 wt.%, relative to the weight of the spinning solution, of a synthetic first polymer in combination with 0.1 to 30 wt.%, relative to the weight of the spinning solution, of a hydrophilic second polymer, whereby the synthetic first polymer, in the case of the combination, can be hydrophilic or hydrophobic, and, if necessary, other additives in a solvent system,
b. extruding the spinning solution through the annular slit of a hollow-fibre die to give a hollow fibre,
c. extruding an interior filler through the central opening of the hollow-fibre die, the interior filler being a coagulation medium for the synthetic first polymer and comprising a solvent and a non-solvent for the synthetic first polymer,
d. bringing the interior filler into contact with the inner surface of the hollow fibre, to initiate coagulation in the interior of the hollow fibre and for formation of a separating layer on the inner surface of the hollow fibre and of the membrane structure,
e. passing the hollow fibre through a coagulation bath, to complete the formation of the membrane structure if necessary, and to fix the membrane structure,
f. extracting the hollow-fibre membrane thus formed, to remove the solvent system and soluble substances, and
g. drying the hollow-fibre membrane,

whereby the process steps are to be performed such that a hollow-fibre membrane according to Claim 1, with an ultrafiltration rate in albumin solution in the range of 5 to 25 ml/(h·m$^2$·mmHg) and a maximum sieving coefficient for albumin of 0.005 combined with a sieving coefficient for cytochrome c that satisfies the following equation is obtained:

$$SC_{CC} \geq 5 \cdot 10^{-5} \cdot UFR_{Alb}^3 - 0.004 \cdot UFR_{Alb}^2 + 0.1081 \cdot UFR_{Alb} - 0.25$$

**characterised in that** the interior filler contains a polyelectrolyte with negative fixed charges in the proportion by weight of 0.01 to 1 wt.% relative to the weight of the interior filler.

**11.** Method according to Claim 10, **characterised in that** the spinning solution contains 12 to 30 wt.%, relative to the weight of the spinning solution, of a hydrophobic first polymer in combination with 0.1 to 30 wt.%, relative to the weight of the spinning solution, of a hydrophilic second polymer.

**12.** Method according to Claim 11, **characterised in that** an aromatic sulfone polymer (such as polysulfone, polyethersulfone, polyphenylenesulfone or polyarylethersulfone), polycarbonate, polyimide, polyetherimide, polyetherketone, polyphenylene sulfide, or a copolymer or mixture of these polymers is used as the hydrophobic first polymer.

**13.** Method according to one or more of Claims 10 to 12, **characterised in that** polyvinylpyrrolidone, polyethylene glycol, polyvinyl alcohol, polyglycol monoester, polysorbate, carboxylmethylcellulose, or a copolymer of these polymers is used as the hydrophilic second polymer.

**14.** Method according to one or more of Claims 10 to 13, **characterised in that** the solvent system comprises a polar aprotic solvent.

**15.** Method according to one or more of Claims 10 to 14, **characterised in that** the polyelectrolyte is selected from the group of polyphosphoric acids, polysulfonic acids, or polycarboxylic acids.

**16.** Method according to Claim 15, **characterised in that** the polycarboxylic acids are homo- or copolymers of acrylic acid.

## Revendications

**1.** Membrane hydrophile, semi-perméable et mouillable par l'eau, en fibres creuses, pour la purification du sang, à base d'un polymère hydrophile, synthétique qui forme la structure de la membrane ou d'une combinaison d'un

premier polymère synthétique qui forme la structure de la membrane et d'un deuxième polymère hydrophile, le premier polymère synthétique de la combinaison pouvant être hydrophile ou hydrophobe, et au cas où le premier polymère synthétique est hydrophobe, le deuxième polymère hydrophile assure l'hydrophilie de la membrane à fibres creuses, la membrane à fibres creuses présentant sur sa paroi une structure intégrée asymétrique à pores ouverts et sur sa surface intérieure tournée vers le lumen une couche de séparation d'une épaisseur de 0,1 à 2 $\mu$m qui présente des pores ainsi que, en position adjacente à la couche de séparation, une couche de support à pores ouverts, et son taux d'ultrafiltration dans une solution d'albumine $UFR_{Alb}$ est compris dans la plage de 5 à 25 ml/(h. $m^2$.mm Hg), **caractérisée en ce qu'**un polyélectrolyte à charges fixes négatives est lié physiquement à la couche de séparation et **en ce que** la membrane à fibres creuses, sans additif pour stabiliser les pores ménagés dans la paroi de la membrane et après un séchage préalable, présente un coefficient de tamisage de l'albumine $SK_{Alb}$ d'au plus 0,005 en association à un coefficient de filtrage des cytochromes C $SK_{SKcc}$, pour lequel la relation :

$$SK_{cc} \geq 5 \ . \ 10^{-5} \ . \ UFR_{Alb}^{3} - 0,004 \ . \ UFR_{Alb}^{2} + 0,1081 \ . \ UFR_{Alb} - 0,25$$

est vérifiée, $UFR_{Alb}$, $SK_{cc}$ et $SK_{Alb}$ étant déterminés par les méthodes indiquées dans la description.

**2.** Membrane à fibres creuses selon la revendication 1, **caractérisée en ce qu'**elle présente un coefficient de tamisage du cytochrome C qui satisfait la relation :

$$SK_{cc} \geq 5 \ . \ 10^{-5} \ . \ UFR_{Alb}^{3} - 0,004 \ . \ UFR_{Alb}^{2} + 0,1081 \ . \ UFR_{Alb} - 0,12.$$

**3.** Membrane à fibres creuses selon les revendications 1 ou 2, **caractérisée en ce qu'**elle comprend un premier polymère hydrophobe qui forme sa structure et un deuxième polymère hydrophile.

**4.** Membrane à fibres creuses selon la revendication 3, **caractérisée en ce que** le premier polymère hydrophobe est un polymère de sulfone aromatique, par exemple du polysulfone, du polyéthersulfone, du sulfone de polyphénylène ou du sulfone de polyaryléther, un polycarbonate, un polyimide, un polyétherimide, une cétone de polyéther, un sulfure de polyphénylène ou un copolymère ou mélange de ces polymères.

**5.** Membrane à fibres creuses selon la revendication 4, **caractérisée en ce que** le premier polymère hydrophobe est un polysulfone ou un polyéthersulfone.

**6.** Membrane à fibres creuses selon l'une ou plusieurs des revendications 1 à 5, **caractérisée en ce que** le deuxième polymère hydrophile est du polyvinylpyrrolidone, du polyéthylène glycol, de l'alcool polyvinylique, du polyglycolmonoester, du polysorbitate, de la carboxyméthylcellulose ou un copolymère de ces polymères.

**7.** Membrane à fibres creuses selon l'une ou plusieurs des revendications 1 à 6, **caractérisée en ce que** la couche de support s'étend depuis la couche de séparation sur essentiellement la totalité de la paroi de la membrane à fibres creuses, présente une structure de type éponge et ne présente pas de pores tubulaires.

**8.** Membrane à fibres creuses selon l'une ou plusieurs des revendications 1 à 7, **caractérisée en ce qu'**elle présente un coefficient de tamisage de l'albumine d'au plus 0,003.

**9.** Membrane à fibres creuses selon l'une ou plusieurs des revendications 1 à 8, dont le taux d'ultrafiltration dans une solution d'albumine est compris dans la plage de 10 à 25 ml/(h $m^2$ mm Hg).

**10.** Procédé de fabrication d'une membrane à fibres creuses hydrophile, semi-perméable et mouillable par l'eau, le procédé comprenant les étapes qui consistent à :

a. préparation d'une solution homogène de filage qui comprend de 12 à 30 % en poids par rapport au poids de la solution de filage d'un polymère hydrophile, synthétique ou de 12 à 30 % en poids par rapport à la solution de filage d'un premier polymère synthétique combiné avec de 0,1 à 30 % en poids, par rapport au poids de la solution de filage, d'un deuxième polymère hydrophile, le premier polymère synthétique pouvant dans le cas

de la combinaison être hydrophile ou hydrophobe, ainsi qu'éventuellement d'autres additifs, dans un système de solvant,

b. extrusion de la solution de filage par la fente annulaire d'une buse à fil creux, pour obtenir un fil creux,

c. extrusion d'un remplissage intérieur par l'ouverture centrale de la buse à fil creux, le remplissage intérieur étant un agent de coagulation du premier polymère synthétique, lequel agent comprend un solvant ainsi qu'un non-solvant du premier polymère synthétique,

d. mise en contact du remplissage intérieur avec le côté intérieur du fil creux pour déclencher la coagulation à l'intérieur du fil creux et former une couche de séparation sur le côté intérieur du fil creux et la structure de membrane,

e. passage du fil creux dans un bain de coagulation pour compléter, le cas échéant, la formation de la structure de membrane et fixer la structure de membrane,

f. extraction de la membrane à fibres creuses ainsi formée pour éliminer le système de solvant ainsi que les substances solubles et

g. séchage de la membrane à fibres creuses, les étapes du traitement étant réalisées de manière à obtenir une membrane à fibres creuses selon la revendication 1 dont le taux d'ultrafiltration dans une solution d'albumine est compris dans la plage de 5 à 25 ml/(h . $m^2$ . mm Hg) et le coefficient de tamisage de l'albumine est d'au plus 0,005 en association à un coefficient de tamisage des cytochromes C qui satisfait la relation :

$$SK_{cc} \geq 5 \,.\, 10^{-5} \,.\, UFR_{Alb}^{3} - 0{,}004 \,.\, UFR_{Alb}^{2} + 0{,}1081 \,.\, UFR_{Alb} - 0{,}25,$$

**caractérisé en ce que**
le remplissage intérieur contient un polyélectrolyte à charges fixes négatives à une teneur en poids de 0,01 à 1 % en poids par rapport au poids du remplissage intérieur.

**11.** Procédé selon la revendication 10, **caractérisé en ce que** la solution de filage contient de 12 à 30 % en poids par rapport au poids de la solution de filage d'un premier polymère hydrophobe combiné avec 0,1 à 30 % en poids par rapport au poids de la solution de filage d'un deuxième polymère hydrophile.

**12.** Procédé selon la revendication 11, **caractérisé en ce que** comme premier polymère hydrophobe, on utilise un polymère aromatique du sulfone, par exemple du polysulfone, du polyéthersulfone, du sulfone de polyphénylène ou du sulfone de polyaryléther, un polycarbonate, un polyimide, un polyétherimide, une cétone de polyéther, un sulfure de polyphénylène ou un copolymère ou mélange de ces polymères.

**13.** Procédé selon l'une ou plusieurs des revendications 10 à 12, **caractérisé en ce que** comme deuxième polymère hydrophile, on utilise du polyvinylpyrrolidone, du polyéthylène glycol, de l' alcool polyvinylique, du polyglycolmonoester, du polysorbitate, de la carboxyméthylcellulose ou un copolymère de ces polymères.

**14.** Procédé selon l'une ou plusieurs de revendications 10 à 13, **caractérisé en ce que** le système de solvant contient un solvant aprotique, polaire.

**15.** Procédé selon l'une des ou plusieurs des revendications 10 à 14, **caractérisé en ce que** le polyélectrolyte est sélectionné dans l'ensemble constitué des acides polyphosphoriques, des acides polysulfoniques et des acides polycarboxyliques.

**16.** Procédé selon la revendication 15, **caractérisé en ce que** les acides polycarboxyliques sont des homo- ou copolymères de l'acide acrylique.

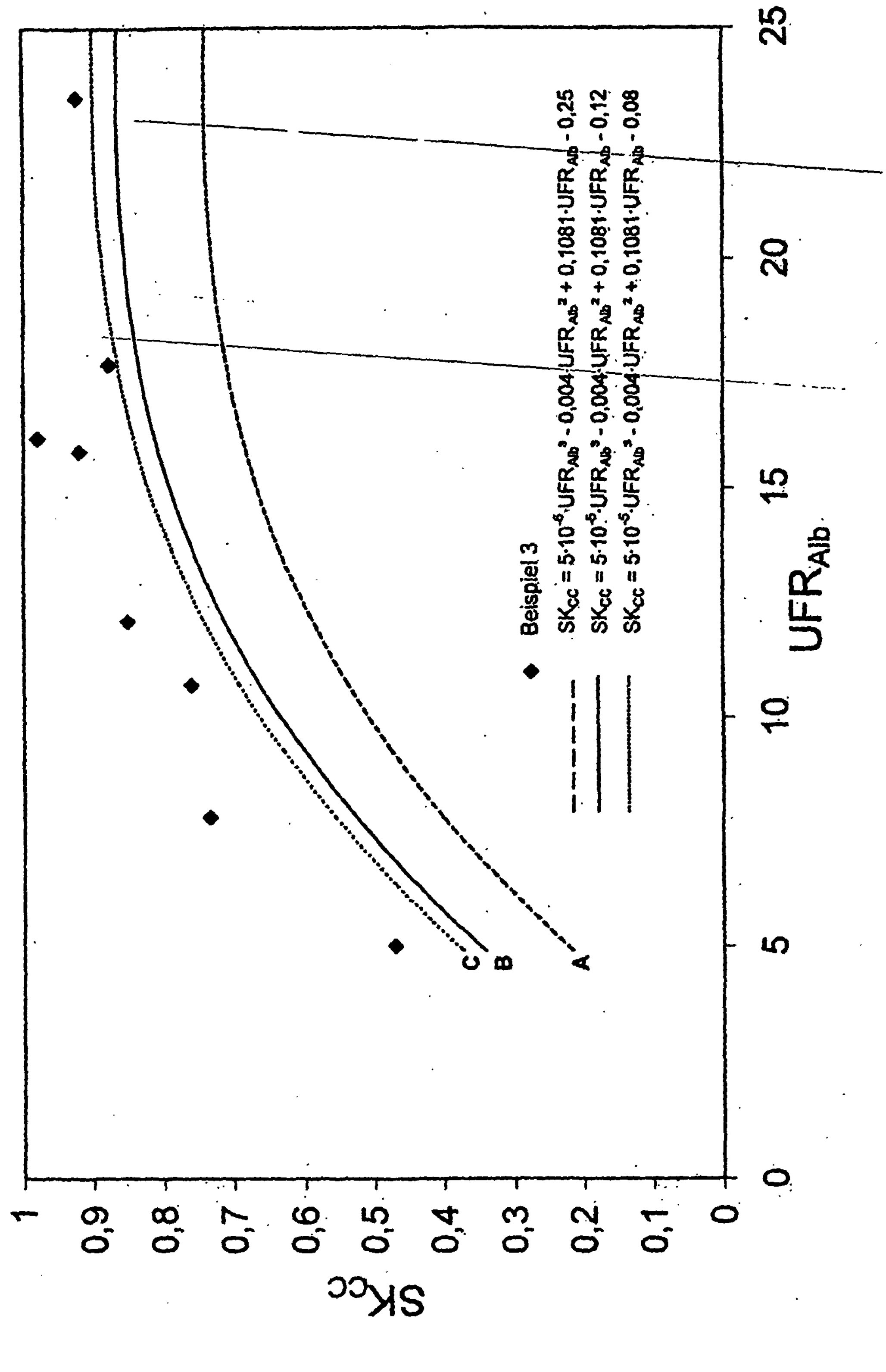

SK$_{CC}$
1
0,9
0,8
0,7
0,6
0,5
0,4
0,3
0,2
0,1
0
0
5
10
15
20
25
UFR$_{Alb}$
A
B
C
Beispiel 3
SK$_{CC}$ = 5·10$^{-5}$·UFR$_{Alb}$$^{3}$ - 0,004·UFR$_{Alb}$$^{2}$ + 0,1081·UFR$_{Alb}$ - 0,25
SK$_{CC}$ = 5·10$^{-5}$·UFR$_{Alb}$$^{3}$ - 0,004·UFR$_{Alb}$$^{2}$ + 0,1081·UFR$_{Alb}$ - 0,12
SK$_{CC}$ = 5·10$^{-5}$·UFR$_{Alb}$$^{3}$ - 0,004·UFR$_{Alb}$$^{2}$ + 0,1081·UFR$_{Alb}$ - 0,08


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5505859 A
- US 5683584 A
- EP 305787 A
- EP 344581 A
- EP 750938 A
- EP 824960 A
- EP 828553 A
- EP 997182 A
- EP 716859 A
- EP 168783 A